(19) Europäisches Patentamt
European Patent Office
Office européen des brevets

(11) Publication number: 0 042 730
B1

(12) # EUROPEAN PATENT SPECIFICATION

(45) Date of publication of patent specification: 20.02.85

(51) Int. Cl.$^4$: G 01 S 7/02

(21) Application number: 81302744.8

(22) Date of filing: 18.06.81

(54) **Radar polarisation detector and method of radar target detection.**

(30) Priority: 23.06.80 US 161797
23.06.80 US 161798

(43) Date of publication of application:
30.12.81 Bulletin 81/52

(45) Publication of the grant of the patent:
20.02.85 Bulletin 85/08

(84) Designated Contracting States:
DE FR GB

(56) References cited:
DE-A-2 821 401
GB-A-2 053 614
US-A-3 430 156
US-A-3 566 403
US-A-3 772 689
US-A-3 849 780
US-A-3 918 055
US-A-4 008 472
US-A-4 053 882
US-A-4 106 015
US-A-4 107 678

Patents Abstracts of Japan Vol. 2, No. 19, 8 February 1978, page 11130E77

(73) Proprietor: SPERRY CORPORATION
1290, Avenue of the Americas
New York, N.Y. 10019 (US)

(72) Inventor: Barnes, Richard Morson
33 Duggan Road
Acton Massachusetts 01720 (US)
Inventor: Vachula, George Michael
Pinnacle Road
Harvard Massachusetts 01451 (US)
Inventor: Bennett, Clarence Leonard, Jr.
Blossom Lane
Groton Massachusetts 01450 (US)

(74) Representative: Singleton, Jeffrey
ERIC POTTER & CLARKSON 27 South Street
Reading Berkshire, RG1 4QU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 042 730 B1

## Description

This invention relates to the art of radar detection and more specifically to a radar polarisation detector and a method of detecting the presence of a radar target immersed in clutter, by utilising the polarisation of a signal reflected from the target.

It is well known in the radar art that a polarised signal incident upon clutter will become depolarised on reflection. Prior art techniques have considered the use of polarisation information to enhance target detection and clutter discrimination. In U.S. Patent No. 3,772,689, a method is disclosed in which the amplitude maxima and minima of the reflected signal are noted as the polarisation of the incident signal is varied. The amount of polarisation variation for a maximum ratio of echo amplitudes is representative of the complexity of the illuminated target. Such a system, while utilising polarisation information does not develop a sufficient detection statistic nor does it minimise the effects of clutter. Thus a method is sought with which the polarisation information contained in a reflected radar signal may be completely characterised.

Polarisation of signals received by a radar system may be utilised to describe the polarisation characteristics, known as Stokes parameters. In the past, Stokes parameters have been used to describe the polarisation of optical frequency signals. A description of such use is presented by Born & Wolf, "Principles of Optics", McMillan Company, 1964, (pages 30—32 and 544—545). The present invention provides a detector which may utilise the Stokes parameters of a returned radar signal to enhance the detection of a radar target immersed in clutter.

The invention which is defined in the appended claims, provides a detector and method which examines the polarisation of reflected target signals immersed in clutter. A receiver having channels responsive to a multiplicity of polarisation components provides output signals representative of each such component. In one preferred embodiment of the invention, these channels are coupled to a signal processor wherein the representative signals are processed to extract characteristic polarisation parameters of the reflected signal. Signals representative of the characteristic polarisation parameters are generated and compared with a predetermined threshold to establish the presence of a target.

In another preferred embodiment, these channels are coupled to a signal modifying circuit wherein one representative signal is phase shifted with respect to the other channels, and the amplitude of the representative signals are varied according to predetermined angles of polarisation. These phase shifted and amplitude modified signals are then coupled to a signal processor wherein the representative signals are processed to extract characteristic polarisation parameters of the reflected signal. Signals representative of the characteristic polarisation parameters are generated and compared with a predetermined threshold to establish the presence of a target.

Two preferred embodiments of detector according to the invention will now be described, by way of example, with reference to the accompanying drawings, in which:—

Figures 1*a* and 1*b* are together a block diagram of the first embodiment of detector,

Figure 2 is a graph of a waveform useful in explaining the operation of the first and second embodiments of the invention,

Figures 3*a* and 3*b* are together a block diagram of the second embodiment of detector,

Figure 4 shows a signal modifying circuit alternative to that shown in Figure 3*a*,

Figure 5 is a diagram useful in explaining the operation of the second embodiment, and

Figure 6 is a table of mathematical expressions useful in explaining the operation of the second embodiment.

Referring to Figures 1*a* and 1*b*, the radar target polarisation detector forming the first embodiment comprises a transceiver 11, a processor 12, a threshold detector 54, and indicator means 55. The transceiver 11 includes a frequency modulated continuous wave (FMCW) transmitter 13 coupled to an input terminal of a power divider 14, an output terminal of which is coupled to an attenuator 16 and an input terminal of a mixer 34 via a directional coupler 15. The attenuator 16 is coupled to an antenna 21, the antenna 21 being also coupled to the mixer 34 via a circulator 20. The output terminal of the mixer 34 is coupled to transceiver output terminal 11*a* via a range gate filter 35. A second output terminal of the power divider 14 is coupled to the input terminal of a variable phase shifter 22, the output terminal of which is coupled to the input terminal of an attenuator 23, the output terminal of which is coupled to a second antenna 25 via a circulator 24. The antenna 25 is also coupled via the circulator 24 to the input terminal 26*a* of a mixer 26, a second input terminal 26*b* of which is coupled to output terminal 14*b* of the power divider 14 via a directional coupler 27. Output terminal 26*c* of the mixer 26 is in turn coupled to an input terminal of a range gate filter 30, the output terminal of which is coupled to transceiver output terminal 11*b*.

The processor 12 is coupled at its input terminals 12*a* and 12*b* to the transceiver output terminals 11*a* and 11*b*, respectively. The terminal 12*b* is coupled to a detector 31 which is in turn coupled to a squaring circuit 38, the output terminal of which is coupled to the input terminal of an integrator 32. The output terminal of the integrator 32 is coupled both to an input terminal 33*b* of a summer 33 and to a positive input terminal 41*b* of a subtractor 41. Similarly, the terminal 12*a* is coupled to a detector 36, the output terminal of which is coupled to a squaring circuit 37 with the output terminal of the latter being coupled to the input terminal of an integrator 40. The output terminal of the integrator 40 is coupled both to an input terminal 33*a* of the summer 33 and to a negative input terminal 41*a* of the subtractor 41. The processor input terminals 12*a* and 12*b* are further coupled to terminals 42*a* and 42*b*, respectively, of a multiplier 42. An output terminal 42*c* of the multiplier 42 is coupled to a filter 43, the output terminal of which is coupled to an input terminal of an amplifier 44, the output terminal thereof being coupled to the input terminal of an integrator 45. The processor input terminal 12*a* is also coupled to a phase shifter 46, the output terminal of which is coupled to an input terminal 50*a* of a multiplier 50. The processor input terminal 12*b* is additionally coupled to an input terminal 50*b* of the multiplier 50, while the output terminal 50*c* thereof is coupled to an amplifier 52 via a filter 51, with the output terminal of the amplifier 52 being coupled to the input terminal of an integrator 53. The output terminals of the summer 33, subtractor 41, integrator 45 and integrator 53 are coupled to threshold detector input terminals 54*a*, 54*b*, 54*c* and 54*d*, respectively, of the threshold detector 54, the output terminal of which is coupled to the indicator means 55.

The transceiver 11 performs the functions of both a dual input receiver and dual output transmitter. The FMCW transmitter 13 generates a linear FM signal that is coupled to the antennae 21 and 25 which may have polarisations that are substantially orthogonal to each other. For the purposes of discussion, the antenna 21 will be considered vertically polarised and the antenna 25 horizontally polarised. The relative phase and amplitude of the signal applied to the vertically polarised antenna 21 and the horizontally polarised antenna 25 can be varied, allowing the user to transmit a signal with any elliptical polarisation desired. It should be noted that many different antenna and signal feed configurations may be used, and that the configuration described is but one of these many configurations. FMCW transmitter 13 generates a linear FM signal with a time duration T that exceeds the signal round-trip time delay Δt required for the signal to be transmitted from the antennae 21 and 25, reflected from the target, and received by the antennae 21 and 25. This linear FMCW signal is coupled to the power divider 14 from which linear FM signals are coupled to the vertically polarised antenna 21 via the attenuator 16 and the circulator 20, and to the horizontally polarised antenna 25 via the attenuator 23 and the circulator 24. The attenuators 16 and 23 are used to vary the amplitude of the signal applied to the vertically polarised antenna 21 and the horizontally polarised antenna 25, respectively. Alternatively, the power divider 14 may be constructed to vary the power applied to each antenna 21 or 25. The linear FM signal coupled to the horizontally polarised antenna 25 may be shifted in phase by the phase shifter 22 to provide a phase difference between the signals coupled to the antennae 21 and 25. This phase difference and the amplitude ratio provided by the attenuators 16 and 23 may be chosen such that horizontal and vertical components of the transmitted wave establish any desired elliptical polarisation. It should be noted that linear and circular polarisations are merely special cases of elliptical polarisation.

The antennae 21 and 25 will be responsive to the vertically and horizontally polarised components, respectively, of a signal reflected from a target. Considering the reception of the vertically polarised signal first, the antenna 21 will be energised by the vertically polarised signal component of the reflected linear FM signal, which through the circulator 20 is coupled to the mixer 34, to which a portion of the transmitted linear FM signal is coupled via the directional coupler 15. The signals coupled to the mixer 34 are heterodyned therein to provide a signal frequency that is a function of the time delay between the transmitted and received signal, as will be explained.

Referring now to Figure 2, the frequency versus time characteristic of the transmitted signal 60 generated by the FMCW transmitter 13 and the signal 61 reflected from an illuminated target are shown as they appear at the input terminals of the mixer 34. The time delay Δt between the signals 60 and 61 is the time required for the transmitted signal to propagate through space from the antenna 21, be reflected back from the illuminated target and be received by the antenna 21. Thus, if the transmitted signal 60 begins at time $t_o$, the reflected signal will not appear at the input to the mixer 34 until time $t_1$, where $t_1-t_o=\Delta t$. Since the transmitted signal, and consequently the reflected signal, has a linear frequency versus time characteristic, there will be a constant frequency difference Δf between the transmitted signal 60 and reflected signal 61. The mixer 34 will produce both sum and difference frequencies of which either frequency may be selected. The filter 35 may be of the form of a narrow band filter which can be adjusted to different centre frequencies and thereby function as a range gate. As previously described, the frequency Δf produced by the mixer 34 is dependent upon the distance *d* the transmitted signal must travel before it is reflected and received by the antenna 20 and can be expressed as follows:

$$d=\frac{\Delta f}{2BW}cT$$

where

d=the distance between the antenna and the illuminated target.

Δ = the difference between the transmitted and received signal frequencies.

BW = the bandwidth of the transmitted linear FM signal.

c = free space propagation velocity.

T = the period of the linear FM signal

Thus, by adjusting the centre frequency $F_c$ of the filter 35 to pass only a certain limited band of frequencies centred at Δf, the output signal $E_v(t)$ may be chosen to correspond to the amplitude and phase of targets at a specific predetermined distance according to the above equation. The antenna 25, circulator 24, coupler 27, mixer 26 and filter 30, operate in an identical manner to the operation of the antenna 21, circulator 20, coupler 15, mixer 34 and filter 35, respectively. However, the horizontally polarised antenna 25 is responsive only to the horizontal signal component of the received signal, and therefore the output signal $E_h(t)$ of the filter 30 will correspond to the amplitude and phase of the horizontal signal component of the reflected FM signal. The output signals of the filters 35 and 30 may be represented by the equations $E_v(t)=A_v(t) \sin(\omega t+\varphi_v(t))$ and $E_h(t)=A_h(t) \sin(\omega t+\varphi_h(t))$, respectively, where $A_h(t)$ equals the amplitude of the received signals horizontally polarised component, $A_v(t)$ equals the amplitude of the received signals vertically polarised component, $\omega=2\pi\Delta f$, $\varphi_v(t)$=the phase angle of the vertically polarised component, and $\varphi_h(t)$ equals the phase angle of the horizontally polarised component. Both $\varphi_v(t)$ and $\varphi_h(t)$ are referenced to an arbitrary but unknown phase; however, it is the phase difference, $\varphi_h(t)-\varphi_v(t)$ rather than the absolute phase of the received signals that is important to the operation of the detector.

It will be recognised by those skilled in the art that reflections from a target, illuminated with a polarised wave, regardless of how complicated, will be far less depolarised than reflections from any surrounding clutter.

If a linear FMCW radar signal is incident on a target, the polarisation of the return signal cannot, in general, be described in the same way as for a monochromatic signal. Since it is commonly the case that the target response depends on the frequency of the illuminating signal, which is a linear function of time for FMCW radar, the polarisation transforming characteristics of the target will be time dependent. The reflected electromagnetic wave component amplitudes and phases therefor, will also be time dependent and can be written as follows:

$$E_h(t)=A_h(t)\cos(\omega_o t+\varphi_h(t))\,\hat{h} \qquad (2)$$

$$E_v(t)=A_v(t)\cos(\omega_o t+\varphi_v(t))\,\hat{v} \qquad (3)$$

If the bandwidth of the received time dependent functions $A_h(t)$, $A_v(t)$, $\varphi_h(t)$ and $\varphi_v(t)$ is small when compared with $\omega_o$, then $E_h(t)$ and $E_v(t)$ are said to be quasimonochromatic or narrow band. The polarisation of a quasimonochromatic signal cannot be defined in terms of time independent component amplitudes and relative phases as in the monochromatic case. Either a time dependent polarisation or an average polarisation must be considered. In the present detector, the latter approach is taken and polarisation is defined in terms of the average quantities known as Stokes parameters, which were first introduced to describe the polarisation of optical frequency signals.

The Stokes parameters are average quantities, estimates of which can be generated from the received components of a quasimonochromatic plane wave. The actual Stokes parameters are defined in terms of the amplitudes $A_h(t)$ and $A_v(t)$, and the phases $\varphi_h(t)$ and $\varphi_v(t)$ of the signals given in equations (2) and (3), as follows:

$$s_o=E\,[A_h^2(t)]+E\,[A_v^2(t)] \qquad (4)$$

$$s_1=E\,[A_h^2(t)]-E\,[A_v^2(t)] \qquad (5)$$

$$s_2=2E\,[A_h(t)\,A_v(t)\cos(\varphi_h(t)-\varphi_v(t))] \qquad (6)$$

$$s_3=2E\,[A_h(t)\,A_v(t)\sin(\varphi_h(t)-\varphi_v(t))] \qquad (7)$$

where E [·] denotes an ensemble average. Under ergodic conditions, assumed here, ensemble averages may be approximated by time average, which are denoted by the symbol <·>. The use of time averaging will permit the determination of good estimates of the Stokes parameters, and will be used hereinafter.

In the above, $s_o$ is the sum of the envelopes of the $\hat{h}$ and $\hat{v}$ plane wave E-field components and physically represents the total intensity of power of the received signal; $s_1$, $s_2$ and $s_3$, as opposed to being sum quantities, are difference quantities; $s_1$ is the difference between the intensities of the $\hat{h}$ and $\hat{v}$ E-field components, while $s_2$ is the difference in the intensities of two orthogonal E-field components whose axes are rotated 45° relative to the $\hat{h}$ and $\hat{v}$ axes components used to calculate $s_o$ and $s_1$. The quantity $s_3$, which can be shown to be equal to the difference between the intensities of the right hand circular and the left hand circular component E-field components, may be determined from the product of the $\hat{h}$ and $\hat{v}$ field components when the phase angle of the $\hat{v}$ component has been shifted by $\pi/2$ relative to the $\hat{h}$ component. Because of the $\pi/2$ phase shift of one component, $s_3$ is a measure of the circularly polarised power of the received signal.

A target that returns a circularly polarised signal will have all of its information in $s_3$, because $s_1$ and $s_2$, which measures differences in linear polarisation signals, are zero. Since the phase difference between the components used to calculate $s_1$ and $s_2$ is zero, it may be expected that a target whose reflected signal is linearly polarised will have all its information in $s_1$ and $s_2$, while $s_3$ will be zero.

It is possible to choose detection criteria that are functions of the received signal, and can be applied to a simple threshold device to detect faithfully the presence of a target in a clutter environment. Using such detection criteria, a threshold may be chosen for a specified probability of false alarm ($P_{fa}$). Certain detection criteria (e.g. degree of polarisation and $s_3/s_0$), enable a constant false alarm rate (CFAR) for arbitrarily chosen power levels, to be achieved.

Various detection criteria can be used. One such detection criterion is the degree of polarisation. For a real target, such as tank or an airplane, $s_1$, $s_2$ and $s_3$ will all be, in general, non-zero, i.e., the reflected signal need not be circularly or linearly polarised. It can be elliptically polarised or need not be polarised at all. A quasimonochromatic signal can be unpolarised or partially polarised. With the use of Stokes parameters, it is possible to describe the state of polarisation of a signal reflected from an irregularly shaped object. This may be done with the aid of a quantity P, called the degree of polarisation. The degree of polarisation, defined in terms of the Stokes parameters is:

$$P=\frac{\sqrt{s_1{}^2+s_2{}^2+s_3{}^2}}{s_o} \qquad (8)$$

Physically it is the ratio of the polarised power in the received signal to the total power in the received signal. It is therefore a real number whose range is the interval zero to one. When P=0, the signal is said to be unpolarised while, when P=1, it is said to be completely polarised. A signal whose Stokes parameters produce a $P\varepsilon$ (0, 1) is said to be partially polarised.

Detection criteria such as $s_3/s_0$ and $s_0+s_3$ may be employed to establish a detection threshold. Those skilled in the art will recognise that many other detection criteria having the Stokes parameters as their basis, are possible.

It should be noted that strictly monochromatic radar signals could also be transmitted and the Stokes parameters of the reflected wave determined.

It should also be noted that while FMCW radar is proposed for use in the preferred embodiment of Figures 1*a* and 1*b*, those skilled in the art will appreciate that pulsed radar may be successfully used to provide the quasimonochromatic signals needed to minimise the effects of clutter.

Referring again to Figure 1, the processor 12 is used to estimate the Stokes parameters from the signals applied to the input terminals 12*a* and 12*b*. Considering the parameters $s_o$ and $s_1$, the signals available at the input terminal 12*a* corresponding to the vertically polarised signal, and at the input terminal 12*b* corresponding to the horizontally polarised signals are coupled to the respective squaring circuits 37 and 38. The output signal of the squaring circuit 37 will be equal to $A_v{}^2(t)$ and the output signal of the squaring circuit 38 will equal $A_h{}^2(t)$. In practice, each detector and its associated squaring circuit may be realised by a square law detector. The output signal of the squaring circuit 37 is then coupled to the integrator 40 which integrates the $A_v{}^2(t)$ term over time yielding $\langle A_v{}^2(t)\rangle$. Likewise, the output signal of the squaring circuit 38 is coupled to the integrator 32, the output signal of which will equal $\langle A_h{}^2(t)\rangle$ corresponding to the integration of $A_h{}^2(t)$ over time. Since the signal reflected from clutter tends to be randomly polarised, an increase in integration overtime will reduce the random effects of the clutter in estimating the Stokes parameters.

The outputs of the integrators 40 and 32 are added in the summer 33, whose output signal will then equal $\langle A_v{}^2(t)\rangle+\langle A_h{}^2(t)\rangle=s_o$. Additionally, the output signal of the integrator 40 is subtracted from the output signal of the integrator 32, in the subtractor 41, to yield the Stokes parameter estimate $s_1=A_v{}^2(t)\rangle-\langle A_h{}^2(t)\rangle$.

Stokes parameter $s_2$ is estimated as follows. The signals from transceiver output terminals 11*a* and 11*b* are multiplied in the multiplier 42, yielding the product $A_h(t)\sin(\omega t+\varphi_h(t))\,A_v(t)\sin(\omega t+\varphi_v(t))=1/2\,A_v(t)\,A_h(t)\,[\cos(\varphi_h(t)-\varphi_v(t))-\cos(2\omega t+\varphi_v(t)+\varphi_h(t))]$. The filter 43 filters out the term $\cos(2\omega t+\varphi_v(t)+\varphi_h(t))$, and the remaining term $1/2\,A_v(t)\,A_h(t)\cos(\varphi_h(t)-\varphi_v(t))$ is then multiplied by a factor of 4 in the amplifier 44 to yield the expression $2\,A_v(t)\,A_h(t)\cos(\varphi_h(t)-\varphi_v(t))$, which is related to the Stokes parameter $s_2$, previously defined in equation (6). The output signal from the amplifier 44 is then applied to the integrator 45 which performs the same function as the integrators 40 and 32.

The estimation of Stokes parameter $s_3$ is performed in a manner similar to the estimation of $s_2$. The signal $E_v=A_v(t)\sin(\omega t+\varphi_v(t))$ available at the input terminal 12*a* is applied to the phase shifter 46, the signal resulting being $A_v(t)\sin(\omega t+\varphi_v(t)+\pi/2)$ which is equal to $A_v(t)\cos(\omega t+\varphi_v(t))$. The output signals of the phase shifter 46 and the filter 30 are multiplied in the multiplier 50 to yield the product $A_h(t)\,A_v(t)/2\,[\sin(2\omega t+\varphi_h(t)+\varphi_v(t))+\sin(\varphi_h(t)-\varphi_v(t))]$, which is then coupled to the filter 51 which filters out the term $[\sin(2\omega t+\varphi_h(t)+\varphi_v(t))]$. After amplification in the amplifier 52, the signal that results is equal to $2\,A_v(t)\,A_h(t)\,(\sin(\varphi_h(t)-\varphi_v(t))$. Once again the signals are applied to the integrator 53 which performs the same function as the integrators 32, 40 and 45, and the resulting output $\langle 2\,A_v(t)\,A_h(t)\sin(\varphi_h(t)-\varphi_v(t))\rangle$ is equal to time averaged estimate of the Stokes parameters $s_3$.

The resulting estimated Stokes parameters $s_o$, $s_1$, $s_2$ and $s_3$ can then be applied to the input terminals 54*a*, 54*b*, 54*c* and 54*d*, respectively, of the threshold detector 54 wherein the four Stokes parameters may be analysed in accordance with the detection criteria selected, compared with a predetermined threshold level, and a decision made concerning the nature of the illuminated object. The outcome of such decision is then displayed on the indicator means 55.

Referring to Figures 3*a* and 3*b*, the second embodiment of detector comprises a transceiver 111, an amplitude modification circuit 112, a processor 113, a threshold detector 114, and an indicator 115. The transceiver 111 includes a frequency modulated continuous wave (FMCW) transmitter 116 coupled via a directional coupler 123 to an attenuator 117 which is in turn coupled to an antenna 120 via a directional coupler 122 and a circulator 118. The antenna 120 is also coupled to a mixer 121 via the circulator 118, the mixer 121 being further coupled to the attenuator 117 via the directional coupler 122. The FMCW transmitter 116 is also coupled to a phase shifter 124 via the directional coupler 123 which is in turn coupled to an antenna 127 via an attenuator 125 and a circulator 126. The antenna 127 is coupled via the circulator 126 to a mixer 130 which is in turn coupled to the FMCW transmitter 116 via the directional couplers 131 and 123. The output terminals of the mixer 121 and the mixer 130 are coupled respectively to transceiver output terminals 111*a* and 111*b*.

The signal modification circuit 112 includes in its preferred embodiment a cosine generator 132 coupled to an input terminal 133*a* of a multiplier 133, an input terminal 133*b* thereof being coupled to the signal modification circuit input terminal 112*a*. The output terminal 133*c* of the multiplier 33 is coupled to the signal modification circuit output terminal 112*c*. A sine generator 134 is coupled to an input terminal 135*a* of a multiplier 135, another input terminal 135*b* of which is coupled to the signal modification circuit input terminal 112*b* via a phase shifter 136, the output terminal 135*c* of the multiplier 135 being coupled to signal modification circuit output terminal 112*d*.

Referring now to Figure 4, the signal modification circuit 112 may alternatively comprise an attenuator 147 coupled to the input terminal 112*b* via a phase shifter 146, the output terminal of the attenuator 147 being coupled to signal modification circuit output terminal 112*d*. The input terminal of an attenuator 150 is coupled to a movable arm 149*a* of a switch 149, which has input terminals 149*b* and 149*c* coupled to modification circuit input terminal 112*a* and an output terminal of an inverter 148, respectively. The input terminal of the inverter 148 is coupled to the input terminal 112a, the output terminal of the attenuator 150 being coupled to modification circuit output terminal 112*c*.

Referring again to Figures 3*a* and 3*b*, the processor 113 includes a summer 140 having respective input terminals coupled to the processor input terminals 113*a* and 113*b*. The output terminal of the summer 140 is coupled to a narrow band filter 141 which in turn is coupled to an amplitude detector 142, the output terminal of which is coupled to a squaring circuit 143. The output terminal of the squaring circuit 143 is coupled to an integrator 144, the output terminal thereof being coupled to a computer 145 which is in turn coupled to the indicator 115 through the threshold detector 114.

In a manner similar to that of the first embodiment, the transceiver 111 performs the functions of both dual input receiver and a dual output transmitter. The FMCW transmitter 116 generates a linear FM signal that is coupled to antennae 120 and 127 which have polarisations that are substantially orthogonal to each other. For the purposes of discussion, the antenna 120 will be considered vertically polarised and the antenna 127 horizontally polarised. Those skilled in the art, however, will appreciate that the polarisation vectors need not be limited to vertical and horizontal. The relative phase and amplitude of the signal applied to the vertically polarised antenna 120 and the horizontally polarised antenna 127 may be varied, allowing the user to transmit a signal with any elliptical polarisation desired. It should be noted that many different antenna and signal configurations may be used and that the configuration described is but one of these many configurations. The FMCW transmitter 116 generates a linear FM signal with a time duration T that exceeds the round trip time delay $\Delta t$ required for the signal to be transmitted from the antennae 120 and 127, reflected from the target, and received by the antennae 120 and 127. This linear FMCW signal is coupled to the vertically polarised antenna 120 via the attenuator 117, directional couplers 122 and 123, and circulator 118, and to the horizontally polarised antenna 127 via directional couplers 123 and 131, phase shifter 124, attenuator 125 and circulator 126. The attenuators 117 and 125 are used to vary the amplitude of the signal applied to vertically polarised antenna 120 and horizontally polarised antenna 127, respectively. The linear FM signal coupled to the horizontally polarised antenna 127 may be shifted in phase by the phase shifter 124 to provide a phase difference between the signals coupled to the antennae 120 and 127. This phase difference and the amplitude ratio provided by the attenuators 117 and 125 may be chosen such that horizontal and vertical components of the transmitted wave establish any desired elliptical polarisation. It should be noted that linear and circular polarisations are merely special cases of elliptical polarisation.

The antennae 120 and 127 will be responsive to the vertically and horizontally polarised components, respectively, of a signal reflected from a target. Considering the reception of the vertically polarised signal first, the antenna 120 will be excited by the vertically polarised signal component of the reflected linear FM signal, which through the circulator 118 is coupled to the mixer 121, to which a portion of the transmitted linear FM signal is coupled via the directional coupler 122. The signals coupled to the mixer 121 are heterodyned therein to provide a signal $E_v^r(t)$, which corresponds to the amplitude and phase of the vertical signal component and whose centre frequency is a function of the time delay between the transmitted and received signal, as will be explained. Figure 2 applies to the second embodiment also. That is to say Figure 2 shows the frequency versus time characteristic of the transmitted signal 60 generated by the FMCW transmitter 116 and the signal 61 reflected from the illuminated target as they appear at the input terminals of the mixer 121. The time delay $\Delta t$ is the time required for the transmitted signal to propagate through space from the antenna 120, reflect back from the illuminated target and be received by the antenna 120. Thus, if the transmitted signal 60 begins at time $t_o$, the reflected signal will not appear at the input to the mixer 121 until time $t_1$, where $t_1-t_o=\Delta t$. Since the transmitted and consequently the reflected signal have a linear frequency versus time characteristic, there will be a constant frequency difference $\Delta f$ between the transmitted signal 60 and reflected signal 61. The mixer 121 will produce both sum and difference frequencies of which either frequency may be selected. The antenna 127, circulator 126, directional coupler 131, and mixer 130 operate in an identical manner to the operation of antenna 120, circulator 118, coupler 122 and mixer 121, respectively. The horizontally polarised antenna 127, however, is responsive only to the horizontal signal component of the received signal; therefore, the output signal $E_h^r(t)$ of the mixer 130 will correspond to the amplitude and phase of the horizontal signal component of the reflected FM signal. The output signal of the mixers 121 and 130 may be represented by the equations

$$E_v^r(t)=A_v(t)\cos(\omega t-\varphi_v(t))$$

$$E_h^r(t)=A_h(t)\cos(\omega t-\varphi_h(t))$$

where $A_h(t)$ equals the amplitude of the received signal's horizontally polarised component, $A_v(t)$ equals the amplitude of the received signal's vertically polarised component, $\omega=2\pi\Delta f$, $\varphi_v(t)=$ the phase angle of the vertically polarised component, $\varphi_h(t)$ equals the phase angle of the horizontally polarised component, and the superscript r denotes the real component of the complex quantities $E_h(t)$ and $E_v(t)$. Both $\varphi_v(t)$ and $\varphi_h(t)$ are referenced to an arbitrary but unknown phase, since it is the phase difference, $\varphi_h(t)-\varphi_v(t)$, rather than the absolute phase of the received signals that is important to the operation of the detector.

It should be recognized by those skilled in the art that reflections from a target, illuminated with a polarised wave, regardless of how complicated, will be far less depolarised than reflections from any surrounding clutter.

If a linear FMCW radar signal is incident on a target, the polarisation of the return signal cannot, in general, be described in the same way as for a monochromatic signal. Since it is commonly the case that the target response depends on the frequency of the illuminating signal, which is a linear function of time for FMCW radar, the polarisation transforming characteristics of the target will be time dependent. The reflected electromagnetic wave component amplitudes and phases, therefore, will also be time dependent and can be written as follows:

$$E_h(t)=A_h(t)\,e^{i\,(\omega_o t-\varphi_h(t))} \qquad (9)$$

$$E_v(t)=A_v(t)\,e^{i\,(\omega_o(t)-\varphi_v(t))} \qquad (10)$$

If the bandwidth of the received time dependent functions $A_h(t)$, $A_v(t)$, $\varphi_h(t)$ and $\varphi_v(t)$ is small when compared with $\omega_o$, then $E_h(t)$ & $E_v(t)$ are said to be quasimonochromatic. Therefore, the polarisation of a quasimonochromatic signal cannot be defined in terms of time independent component amplitudes and relative phases as in the monochromatic case. Either a time dependent polarisation or an average polarisation must be considered. In the present embodiment, the latter approach is taken and polarisation is defined in terms of the averaged quantities known as Stokes parameters, which were first introduced to describe the polarisation of optical frequency signals.

As previously mentioned, the Stokes parameters are average quantities, estimates of which can be generated from the received components of a quasimonochromatic plane wave. The actual Stokes parameters are defined as follows in terms of the amplitudes $A_h(t)$ and $A_v(t)$, and the phase angles, $\varphi_h(t)$ and $\varphi_v(t)$ of the signals given in equations 9 and 10:

$$\begin{aligned} s_o&=E[A_h^2(t)]+E[A_v^2(t)]\\ s_1&=E[A_h^2(t)]-E[A_v^2(t)]\\ s_2&=E[A_h(t)\,A_v(t)\cos(\varphi_h(t)-\varphi_v(t))]\\ s_3&=2E[A_h(t)\,A_v(t)\sin(\varphi_h(t)-\varphi_v(t))] \end{aligned} \qquad (11)$$

where E [·] denotes an ensemble average. Under ergodic conditions, assumed here, ensemble averages may be approximated by time averages, which are denoted by the symbol <·>. The use of time averaging will permit the determination of good estimates of the Stokes parameters, and will be used hereinafter.

In equation (11), $s_o$ is the sum of the envelopes of the $\hat{h}$ and $\hat{v}$ plane wave E-field components and physically represents the total intensity of power or the received signal. $s_1$, $s_2$,

and $s_3$, as opposed to being sum quantities, are difference quantities. $s_1$ is the difference between the intensities of the $\hat{h}$ and $\hat{v}$ E-field components, while $s_2$ is the difference in the intensities of two orthogonal E-field components whose axes are rotated 45° relative to the $\hat{h}$ and $\hat{v}$ axes. The quantity $s_3$, which can be shown to be equal to the difference between the intensities of the right hand circular and the left hand circular components of the E-field, may be determined from the product of the $\hat{h}$ and $\hat{v}$ field components when the phase angle of the $\hat{v}$ component has been phase shifted by $\pi/2$ relative to the $\hat{h}$ component.

A target that returns a circularly polarised signal will have all of its information in $s_3$, because $s_1$ and $s_2$, which measure differences in linear polarisation signals, are zero. Since the phase difference between the components used to calculate $s_1$ and $s_2$ is zero, it may be expected that a target whose reflected signal is linearly polarised will have all its information in $s_1$ and $s_2$, while $s_3$ will be zero.

The Stokes parameters may be established by measuring the time averaged radiation intensity of the signal reflected from a target under various measurement conditions. If the vertical component is subjected to a phase shift $\varepsilon$ with respect to the horizontal component, the result may be denoted by the expression $E_v(t)e^{i\varepsilon}$. If we further consider the electric field, $E(t;\theta,\varepsilon)$, as the vector sum of the electric field components $E_h(t)$ and $E_v(t)$, in a direction which makes an angle $\theta$, called the polarisation angle, with respect to the positive horizontal direction, we see with the aid of Figure 5, that

$$E(t;\theta,\varepsilon=E_h(t)\cos\theta+E_v(t)\,e^{i\varepsilon}\sin\theta.$$

The time averaged radiation intensity, $I(\theta,\varepsilon)$, may be determined from the measured complex electric field intensities such that

$$I(\theta,\varepsilon=<E(t;\theta\varepsilon)\ E^*(t;\theta,\varepsilon)>$$
$$=<|E(t;\theta,\varepsilon|^2>$$
$$=<A_h^2(t)>\cos^2\theta+<A_v^2(t)>\sin^2\theta \qquad (12)$$
$$+<A_h(t)\ A_v(t)\ e^{i(\varphi_h-\varphi_v)}>e^{-i\varepsilon}\cos\theta\sin\theta$$
$$+<A_h(t)\ A_v(t)\ e^{-i(\varphi_h-\varphi_v)}>e^{i}\sin\theta\cos\theta$$

Examination of this expression reveals that by varying the quantities $\theta$ and $\varepsilon$ one obtains the time averaged radiation intensity $I(\theta,\varepsilon)$ as a function of $\theta$ and $\varepsilon$. It will be appreciated, that if appropriate pairings of $\theta$ and $\varepsilon$, hereinafter referred to as measurement pairs $(\theta,\varepsilon)$, are chosen, the Stokes parameters of the received electromagnetic signal may be obtained from the radiation intensity, $I(\theta,\varepsilon)$ determined from these pairings. One can, for example, choose the six measurement pairs, $(\theta,\varepsilon)$; (0°, 0) (45°, 0), (90°, 0) (135°, 0), (45°, $\pi/2$), and (135°, $\pi/2$), which will allow one to accumulate data as shown in the table in Figure 6.

The Stokes parameters, as defined in equation (11), may be obtained as follows from the radiation intensities determined for the six measurement pairs given in Figure 6:

$$s_o=I(0°,\ 0)+I(90°,\ 0)=<|E_h(t)|^2>+<|E_v(t)|^2>$$
$$=<A_h^2(t)>+<A_v^2(t)> \qquad (13)$$

$$s_1=I(0°,\ 0)-I(90°,\ 0)=<|E_h(t)|^2>-<|E_v(t)|^2>$$
$$=<A_h^2(t)>-<A_v^2(t)> \qquad (14)$$

$$s_2=I(45°,\ 0)-I(135°,\ 0)$$
$$=1/2(2<E_h(t)E_v^*(t)>+2<E_h^*(t)E_v(t)>)$$
$$=2Re<E_h(t)E_v^*(t)>=2<A_h(t)A_v(t)\ \cos(\varphi_k-\varphi_v)> \qquad (15)$$

$$s_3=I(45°,\ \pi/2)-I(135°,\ \pi/2)$$
$$=1/2(2<E_h(t)E_v^*(t)>-2\ <E_h^*(t)\ E_v(t)>$$
$$=-2\ Im<E_h(t)\ E_v^*(t)>$$
$$=2<A_h(t)\ A_v(t)\ \sin\ (\varphi_h-\varphi_v)> \qquad (16)$$

It is possible to choose detection criteria which are functions of the received signal, and can be applied to a simple threshold device to faithfully detect the presence of a target in a clutter environment. Using such detection criteria, a threshold may be chosen for a specified probability of false alarm ($P_{fa}$). Certain detection criteria (e.g. degree of polarisation and $s_3/s_o$ discussed below) provide constant false alarm rate (CFAR) for arbitrary clutter power levels.

Various detection criteria can be used. One such detection criterion is the degree of polarisation. For a real target, such as a tank or an airplane, $s_1$, $s_2$ and $s_3$ will all be, in general, non-zero, i.e., the reflected signal need not be circularly or linearly polarised. It can be elliptically polarised or need not be polarised at all. A quasimonochromatic signal can be unpolarised or partially polarised. With the use of Stokes parameters, it is possible to describe the state of polarisation of a signal reflected from an irregularly shaped object. This may be done with the aid of a quantity P, called the degree of polarisation. The degree of polarisation defined in terms of the Stokes parameters is:

$$P=\frac{\sqrt{s_1^2+s_2^2+s_3^2}}{s_o} \qquad (17)$$

Physically it is the ratio of the polarised power in the received signal to the total power in the received signal. It is therefore a real number whose range is the interval zero to one. When P=0, the signal is said to be unpolarised while, when P=1, it is said to be completely polarised. A signal whose Stokes parameters produce a $P\varepsilon(0, 1)$ is said to be partially polarised.

Detection criteria such as $s_3/s_0$ and $s_0+s_3$ may be employed to establish a detection threshold. Those skilled in the art will recognise that many other detection criteria having the Stokes parameters as their basis, are possible.

It should be noted strictly monochromatic radar signals could also be transmitted and the Stokes parameters of the reflected wave determined.

It should also be noted that while FMCW radar is proposed for use in the embodiment of Figures 3*a* and 3*b*, those skilled in the art will appreciate that pulsed radar may be successfully used to provide the quasimonochromatic signals needed to minimise the effects of clutter.

Referring again to Figures 3*a* and 3*b*, the signal modification circuit 112 is used to multiply the amplitude of the representative signals $E_v(t)$ and $E_h(t)$ applied to the signal modification circuit input terminals 112*a* and 112*b*, respectively, by signals generated in the cosine generator 132 and the sine generator 134, respectively. These functions are chosen in accordance with the previously discussed angles for $\theta$ as illustrated in Figure 6. Thus, the output signal available from the cosine generator 132 and the sine generator 134 will change according to the angle $\theta$ of the measurement pair $(\theta,\varepsilon)$ chosen. Additionally, the signal modification circuit 112 contains the phase shifter 136 which is coupled to the input terminal 112*b* and which will phase shift the signal $E_h(t)$ by an amount $\varepsilon$ as previously discussed and shown in Figure 6. Thus, by varying the phase shift $\varepsilon$ provided by the phase shifter 136, and the functions generated by the cosine generator 132 and the sine generator 134, it is possible to determine measurement pairs for the purpose of establishing the Stokes parameters as described in equations (13) to (16). The signal modification circuit may alternatively be as shown in Figure 4. The phase shifter 146 performs the same function as the phase shifter 136. The attenuators 147 and 150, inverter 148 and switch 149 are adjusted such that they will modify the amplitude of the representative and phase shifted signals in accordance with the polarisation angle $\theta$ and the sines and cosines thereof. For example, measurement pair number 1 in Figure 6 calls for a polarisation angle $\theta=0$; the value of the cosine and sine of 0° are 1 and 0, respectively. Thus, by adjusting the attenuator 147 to provide zero attenuation, the amplitude of the phase shifted representative signal will be unchanged, or effectively multiplied by a factor of 1. The attenuator 150 would be adjusted to highly attenuate the signal coupled to its input terminal so that a substantially zero level signal is coupled to its output terminal, and thus have the effect of multiplying the representative signal substantially by zero. As a further example, consider measurement pair number 3 wherein the polarisation angle $\theta$ is to be set to 45°, the sine and cosine of which equal $\sqrt{2}/2$ or approximately .707. Adjustment of the attenuators 147 and 150 such that the signal available at the output terminals is attenuated to equal 70.7% of the signal applied to their input terminals effectively multiplies the signal available at the input terminal by a factor of .707. The inverter 148 and the switch 149 may be operated in conjunction with the attenuator 150 to provide cosine values that are negative. For example, measurement pairs 4 and 6, as shown in Figure 6, require the generation of the cosine of the polarisation angle $\theta=135°$, which equals $-\sqrt{2}/2$ or approximately $-.707$. The attenuator 150, by itself, can only provide attenuation of the incoming representative signal so that it equals 70.7% of its original value; the attenuator cannot, however, provide the inversion necessary to obtain a value of $-.707$. In such an instance, the switch 149 may be positioned to couple the attenuator 150 to the inverter 148, which effectively multiplies the signal received by the attenuator 150 by $-1$. When the inverter 148 is not needed, the switch 149 may be positioned so that the inverter 148 is by-passed.

The summer 140 has input terminals 113*a* and 113*b* coupled respectively to output terminals 112*c* and 112*d* so that the amplitude modified and phase shifted representative signals received from signal modification circuit terminals 112*c* and 112*d* are summed therein to provide an output signal

$$E(t;\theta,\varepsilon)=E_h(t)\cos\theta+E_v(t)e^{i\varepsilon}\sin\theta$$

This signal is coupled to the input of the filter 141, which may be a narrow band filter that can be adjusted to different centre frequencies and thereby function as a range gate.

As previously described, the frequency $\Delta f$ produced by the mixer 121 or 130 is dependent upon the distance *d* the transmitted signal must travel before it is reflected and received by the antenna 120 or 127, respectively, and can be expressed as follows:

$$d=\frac{\Delta f}{2BW}cT \qquad (18)$$

where

d=the distance between the antenna and the illuminated target.

$\Delta f$=the difference between the transmitted and received signal frequencies.

BW=the bandwidth of the transmitted linear FM signal.

c=free space propagation velocity.

T=the period of the linear FM signal.

Thus, by adjusting the centre frequency $F_c$ of the filter 141 to pass only a certain limited band of frequencies centred at Δf, the filter output signal E(t; θε) may be chosen to correspond to the amplitude and phase of targets at a specific predetermined distance according to equation (18).

The detector 142 is coupled to the output terminal of the filter 141 and determines the amplitude of signals applied to its input terminal such that the signal available at its output terminal equals the signal $|E(t;\theta,\varepsilon)|$, which signal is then coupled to the input terminal of the squaring circuit 143. The output signal of the squaring circuit 143 will be equal to $|E(t;\theta,\varepsilon)|^2$. In practice, the amplitude detector 142 and the squaring circuit 143 may be realised by a square law detector. It should be appreciated that the output signal available from the squaring circuit 143 will be representative of the radiation intensity of the received signal for the measurement conditions selected as previously described in equation (12). This radiation intensity representative signal may then be integrated in the integrator 144 to yield the term $I(\theta,\varepsilon)$. Since the signal reflected from clutter tends to be randomly polarised, an increase in the integration time will reduce the variance of the Stokes parameter estimates.

The output signals available from the integrator 144 may then be combined in computer 145 in accordance with equations (13) to (16) to yield the estimated Stokes parameters $s_0$, $s_1$, $s_2$ and $s_3$. These resulting estimated Stokes parameters may be compared in the threshold detector 114 to a predetermined threshold such that the four estimated Stokes parameters may be analysed in accordance with the detection criteria selected and a decision made concerning the nature of the illuminated object. The outcome of such decision may then be displayed on the indicator 115.

**Claims**

1. A radar polarisation detector comprising receiving means (11, 21, 25) adapted to receive electromagnetic signals having a plurality of signal components each having non-identical predetermined polarisations for providing signals representative of the received signal components and processor means (12) coupled to the receiving means for processing the representative signals, characterised in that the processor means (12) are operable to establish estimates of the Stokes parameters ($s_0$, $s_1$, $s_2$, $s_3$) corresponding to the polarisation of the signals and for providing signals representative of the estimates of the Stokes parameters ($s_0$, $s_1$, $s_2$, $s_3$) and means (54) coupled to the processor means for comparing the signals representative of the estimates of the Stokes parameters ($s_0$, $s_1$, $s_2$, $s_3$) with predetermined threshold signals and for providing signals indicative of the signals representative of the estimates of Stokes parameters ($s_0$, $s_1$, $s_2$, $s_3$) having a signal level greater than the respective threshold signals.

2. A detector according to claim 1, characteried in that the receiving means comprise first antenna means (25) responsive to a first predetermined polarisation component of said electromagnetic signals; second antenna means (21) responsive to a second polarisation component of said electromagnetic signals substantially orthogonal to said first predetermined polarisation and the receiving means further comprise generator means (13) for generating linear frequency modulated signals; means for coupling said generator means (13) to said first and second antenna means (25, 21) whereby a linear FM signal is transmitted from and received by said first and second antenna means; and first and second mixer means (26, 34) coupled respectively to said first and second antenna means and to said generator means for mixing a portion of said generated linear FM signals and said received linear FM signals to provide first and second signals representative of said first and second polarisation signal components, said representative signals being coupled to said processor means (12).

3. A detector according to claim 2, characterised in that the receiving means further include first and second frequency selection means (30, 35) coupled to receive said representative signals from said first and second mixer means (26, 34) respectively for selecting signals within a predetermined band.

4. A detector according to claim 2 or 3, characterised in that the receiving means further include first means (22) coupled between said generator means (13) and said first antenna means (25) for phase shifting signals.

5. A detector according to claim 2, 3 or 4, characterised in that the receiving means further include means (14) coupled between said generator means (13) and said first and second antenna means (25, 21) for varying the power coupled thereto.

6. A detector according to any of the preceding claims, characterised in that the processor means (12) comprise first and second detecting means (31, 36) coupled to said receiving means for determining the amplitude of first and second representative signals received from said receiving means; first and second squaring means (38, 37) coupled respectively to said first and second detecting means (31, 36) for squaring signals received from said first and second detecting means (31, 36) and providing first and second squared signals; subtracting means (41) coupled to said first and second squaring means (38, 37) for subtracting said second squared signals from said first squared signal; summing means (33) coupled to said first and second squaring means (38, 37) for summing said first and second squared signals; first multiplier means (42) coupled to said receiving means for multiplying said first representative signal by said second representative signal; second phase shifting means (46) coupled to said receiving means for phase shifting said second representative signal by 90 degrees; second multiplier means (50) coupled to said second phase shifting means (46) and further coupled to said receiving means for multiplying the signals from said second phase shifting means by said first representative signal; and first amplifier means (44) coupled to said first multiplier means (42) for amplifying the output of the latter, and second amplifier means (52) coupled to said second multiplier means (50) for amplifying the output of the latter.

7. A detector according to claim 6, characterised in that the processor means (12) further include: third frequency selection means (43) coupled between said first multiplier means (42) and said first amplifier means (44) for selecting frequencies within a predetermined band, and fourth frequency selection means (51) coupled between said second multiplier means (50) and said second amplifier means (52) for selecting frequencies within a predetermined band.

8. A detector according to claim 6 or 7, characterised in that the processor means (12) further include: first integrator means (32) coupled between said first squaring means (38) and said summing and subtracting means for integrating signals; second integrator means (40) coupled between said second squaring means (37) and said summing and subtracting means for integrating signals; third integrator means (45) coupled to said first amplifier means (44) for integrating signals; and fourth integrator means (53) coupled to said second amplifier means (52) for integrating signals.

9. A radar target polarisation detector comprising: receiving means (111, 120, 127) for receiving electromagnetic signals having a plurality of signal components each having non-identical predetermined polarisations, and processor means (113) coupled to the receiving means (111, 120, 127) for processing the received signals, characterised in that the detector further comprises modifying means (112) coupled to said receiving means (111, 120, 127) for modifying said received signals in accordance with preselected polarisation angles and relative phase shifts for providing modified representative signals, the processor means (113) being coupled to the signal modifying means for processing said modified representative signals to establish estimates of the Stokes parameters ($s_0$, $s_1$, $s_2$, $s_3$ corresponding to said polarisation of said received signals and for providing signals representative of said estimates of the Stokes parameters ($s_0$, $s_1$, $s_2$, $s_3$), and means coupled to said processor means for comparing said Stokes parameter representative signals with predetermined threshold signals.

10. A detector according to any of the preceding claims, characterised in that the received electromagnetic signals are quasimonochromatic.

11. A detector according to claim 9 or 10, characterised in that the receiving means comprise: first antenna means (127) responsive to a first predetermined polarisation component of said electromagnetic signals; second antenna means (120) responsive to a second polarisation component of said electromagnetic signals substantially orthogonal to said first predetermined polarisation, and the receiving means further comprise: means (116) for generating linear frequency modulated signals; means for coupling said generating means to said first and second antenna means (127, 120) whereby a linear FM signal is transmitted from and received by said first and second antenna means; and first and second mixer means (130, 121) coupled respectively to said first and second antenna means (127, 120) and further coupled to said generator means (116) for mixing a portion of said generated linear FM signals and said received linear FM signals, to provide first and second signals representative of said first and second polarisation signal components, said representative signals being coupled to said signal modifying means (112).

12. A detector according to claim 11, characterised in that the signal modifying means (112) comprise: first and second input terminal means (112*b*, 112*a*); means (136) coupled to said first input terminal means for delaying said first representative signal; means (134) for generating signals representative of the sine of preselected polarisation angles; first multiplier means (135) coupled to said sine generator and said delaying means for multiplying said delayed signals by said sine representative signals; means (132) for generating signals representative of the cosine of said preselected polarisation angles; and second multiplier means (133) coupled to said cosine generator and said second input terminal means for multiplying said second representative signals by said cosine representative signals.

13. A detector according to any of claims 9 to 12 characterised in that the signal modifying means comprise: first and second input terminal means (112*b*, 112*a*); first and second output terminal means (112*d*, 112*c*); means (146) coupled to said first input terminal means (112*b*) for delaying a first received signal; first attenuator means (147) coupled between the delaying means (146) and said first output terminal means (112*d*) for varying the amplitude of said delayed signals; means (148) coupled to said second input terminal means (112*a*) for inverting a second received signal; second attenuator means (150) for varying the amplitude of signals applied thereto; and means (149) coupled to the inverting means (148) for switchably coupling an inverted attenuated signal and a non-inverted attenuated signal to said output terminal means of said signal modifying means.

14. A detector according to claim 9, characterised in that the processor means (113) comprise: means (140) coupled to said signal modifying means for summing said modified representative signals; detecting means (142) coupled to the summing means (140) for determining the amplitude of said summed signals; means (143) coupled to said detecting means (142) for squaring signals received from said detecting means to provide intensity representative signals; and computation means (145) coupled to said squaring means (143) for establishing signals representative of the estimates of the Stokes parameters ($s_0$, $s_1$, $s_2$, $s_3$) from said intensity representative signals.

15. A detector according to claim 14, characterised by further including: means (141) coupled between the summing means (140) and the detecting means (142) for selecting signals at frequencies within a predetermined band.

16. A detector according to claim 14, characterised by further comprising: means (144) coupled between said squaring means (143) and said computation means (145) for integrating said intensity representative signals.

17. A method of detecting the presence of a radar target immersed in clutter comprising the steps of: illuminating said radar target with electromagnetic radiation to provide a signal reflected from said target; receiving electromagnetic radiation signal components of the reflected signal having predetermined non-identical polarisations; providing signals representative of the signal components; and processing said representative signals, characterised in that the processing step is such as to establish estimates of the Stokes parameters ($s_0$, $s_1$, $s_2$, $s_3$) corresponding to the polarisation of said signal components and provide signals representative of said representative of the estimates of the Stokes parameters and in that the method comprises the further step of comparing said signals representative of the estimates of the Stokes parameters with predetermined threshold signals to provide signals indicative of said signals representative of the estimates of the Stokes parameters ($s_0$, $s_1$, $s_2$, $s_3$) having a signal level greater than said threshold signals.

18. A method according to claim 17, characterised in that the received signal components comprise: first signal components of said reflected signal having a first predetermined polarisation; and second signal components of said reflected signal having a second predetermined polarisation substantially orthogonal to said first predetermined polarisation.

19. A method according to claim 17 or 18, characterised in that the step of processing comprises the steps of: detecting the amplitude $A_h(t)$ of a first representative signal; detecting the amplitude $A_v(t)$ of a second representative signal; squaring the first and second amplitude detected signals to provide first and second squared signals; subtracting said second squared signal from said first squared signal to determine the signal $A_h^2(t)-A_v^2(t)$; adding said first and second squared signals to determine the signal $A_h^2(t)+A_v^2(t)$: phase shifting said second representative signal by 90 degrees, multiplying said phase shifted signal by said first representative signal, filtering the product of said first representative signal and said phase shifted signal to select the term of the product corresponding to the sine of the phase difference of the first and second signal components; amplifying said sine term by a factor $\varphi$ of four whereby the signal $A_h(t)\ A_v(t)\ \sin(\varphi_h(t)-\varphi(t))$ is determined; multiplying the first and second representative signals; filtering the product of said first and second representative signal to select the terms of the product corresponding to the cosine of the phase difference of the first and second signals; and amplifying said cosine term by a factor of four, whereby the signal $A_h(t)\ A_v(t)\ \cos(\varphi_h(t)-\varphi_v(t))$ is determined.

20. A method according to claim 19, characterised by further comprising the step of: integrating the signals $A_h^2(t)$, $A_v^2(t)$, $A_h(t)A_v(t)\ \cos(\varphi_h(t)-\varphi_v(t))$ and $A_h(t)\ \sin(\varphi_h(t)-\varphi_v(t))$.

21. A method of detecting the presence of a radar target immersed in clutter comprising the steps of: illuminating said radar target with at least two electromagnetic signals having non-identical polarisations; receiving electromagnetic signal components of reflected signals from said target having non-identical polarisations; and processing the received signals, characterised in that the method comprises the further steps of modifying said received signals in accordance with preselected phase shifts and polarisation angles to provide modified representative signals; processing said modified representative signals to establish estimates of the Stokes parameters ($s_0$, $s_1$, $s_2$, $s_3$) corresponding to the polarisation of said signal components and provide signals representative of said estimates of the Stokes parameters; and comparing said signals representative of the Stokes parameters to predetermined threshold signals.

22. A method according to any of claims 17 to 21, characterised in that said illuminating and received electromagnetic radiation is quasimonochromatic.

23. A method according to claim 21, characterised in that the received signal components comprise: a first signal component of said reflected signal having a first predetermined polarisation; and a second signal component of said reflected signal having a second predetermined polarisation substantially orthogonal to said first predetermined polarisation.

24. A method according to any of claims 21 to 23, characterised in that the step of signal modifying comprises the steps of selecting polarsation angles $\theta$ and phase shifts $\varepsilon$ to establish a multiplicity of measurement pairs $(\theta,\varepsilon)$; phase shifting said first signal component by one of said phase shifts $\varepsilon$; generating a signal representative of the sine of said selected polarisation angle $\theta$ paired with said one phase shift $\varepsilon$; generating a signal representative of the cosine of said selected polarisation angle $\theta$ paired with said one phase shift $\varepsilon$; multiplying said delayed signal by said sine representative signal; and multiplying said second signal component by said cosine representative signal whereby first and second modified signals are provided.

25. A method according to any one of claims 21 to 23, characterised in that the signal modifying step comprises the steps of: selecting polarisation angles $\theta$ and phase shifts $\varepsilon$ to establish a multiplicity of measurement pairs $(\theta,\varepsilon)$; phase shifting said first signal component by one of said phase shifts $\varepsilon$; attenuating the amplitude of said delayed signal in accordance with the sine of said selected polarisation angle $\theta$ paired with said one phase shift $\varepsilon$ attenuating the amplitude of said second representative signal in accordance with the cosine of said selected polarisation angle $\theta$ paired with said one phase shift $\varepsilon$; and inverting said second representative signal in accordance with the cosine of said preselected polarisation angle $\theta$ paired with said one phase shift $\varepsilon$, whereby first and second modified signals are provided.

26. A method according to any one of claims 21 to 23, wherein the step of processing is performed for the measurement pairs (0°, 0), (45°, 0), (90°, 0), (135°, 0), (45°, $\pi/2$) and (135°, $\pi/2$).

27. A method according to claim 26, characterised in that the processing step comprises the steps of: summing said first and second modified signals to provide a summed signal; detecting the amplitude $|E(t;\ \theta,\ \varepsilon)|$ of said summed signal; squaring said summed signal to provide intensity representative signals, $I(\theta, \varepsilon)=|E(t;\ \theta,\varepsilon)|^2$ whereby the intensity representative signals, I(0°, 0), I(45°, 0) I(90°, 0) I(135°, 0) I(45°, $\pi/2$) and I(135°, $\pi/2$) are established and further comprising the steps of summing said intensity representative signal I(0°, 0) and I(90°, 0) to determine the signal I(0°, 0)+I(90°, 0); subtracting said intensity representative signal I(90°, 0) from said intensity representative signal I(0°, 0) to determine the signal I(0°, 0)—I(90°, 0); subtracting said intensity representative signal I(135°, 0) from said intensity representative signal I(45°, 0) to determine the signal I(45°, 0)—I(135°, 0); and subtracting the intensity representative signal I(135°, $\pi/2$) from the intensity representative signal I(45°, $\pi/2$) to determine the signal I(45°, $\pi/2$)—I(135°, $\pi/2$).

28. A method according to claim 27, characterised by further comprising the step of integrating the intensity representative signals whereby estimates of the Stokes parameters $s_0$, $s_1$, $s_2$, and $s_3$ are obtained.

29. A method according to claim 28, characterised by further comprising the step of filtering said summed signal.

**Patentansprüche**

1. Radar-Polarisationsdetektor mit Empfangseinrichtungen (11, 21, 25) zum Empfang von elektromagnetischen Signalen mit einen Vielzahl von Signalkomponenten, die jeweils nicht identische vorgegebene Polarisationen aufweisen, und zur Lieferung von Signalen, die die empfangenen Signalkomponenten darstellen, und mit Verarbeitungseinrichtungen (12), die mit den Empfangseinrichtungen gekoppelt sind und die die empfangenen Signalkomponenten darstellenden Signale verarbeiten, dadurch gekennzeichnet, daß die Verarbeitungseinrichtungen zur Ausbildung von Abschätzungen der der Polarisation der Signale entsprechenden Stokes'schen Parameter ($s_0$, $s_1$, $s_2$, $s_3$) und zur Lieferung von Signalen betreibbar sind, die die Abschätzungen der Stokes'schen Parameter ($s_0$, $s_1$, $s_2$, $s_3$) darstellen, und daß Einrichtungen (54) mit den Verarbeitungseinrichtungen zum Vergleich der die Abschätzungen der Stokes'schen Parameter ($s_0$, $s_1$, $s_2$, $s_3$) darstellenden Signale mit vorgegebenen Schwellwertsignalen und zur Lieferung von Signalen gekoppelt sind, die diejenigen der die Abschätzungen der Stoke'schen Parameter ($s_0$, $s_1$, $s_2$, $s_3$) darstellenden Signale anzeigen, die einen Signalpegel aufweisen, oder größer als die jeweiligen Schwellwertsignale ist.

2. Detektor nach Anspruch 1, dadurch gekennzeichnet, daß die Empfangseinrichtungen erste Antenneneinrichtungen (25), die auf eine erste vorgegebene Polarisationskomponente der elektrischen Signale ansprechen und Zweite Antenneneinrichtungen (21) aufweisen, die auf eine zweite Polarisationskomponente der elektromagnetischen Signale ansprechen, die im wesentlichen orthogonal zu der ersten vorgegebenen Polarisation ist, daß die Empfangseinrichtungen weiterhin Generatoreinrichtungen (13) zur Erzeugung von linearen frequenzmodulierten Signalen, Einrichtungen zum Ankoppel der Generatoreinrichtungen (13) an die ersten und zweiten Antenneneinrichtungen (25, 21), wobei ein lineares frequnzmoduliertes Signal von den ersten und zweiten Antenneneinrichtungen ausgesandt und empfangen wird, und erste und zweite Mischereinrichtungen (26, 34) aufweisen, die mit den ersten bzw. zweiten Antenneneinrichtungen und den Generatoreinrichtungen gekoppelt sind, um einen Teil der erzeugten linearen frequenzmodulierten Signale und der empfangenen linearen frequenzmodulierten Signale zu mischen, um erste und zweite Signale zu liefern, die die ersten und Zweiten Polarisationssignalkomponenten darstellen, und daß diese die ersten und zweiten Polarisationssignalkomponenten darstellenden Signale mit den Verarbeitungseinrichtungen (12) gekoppelt sind.

3. Detektor nach Anspruch 2, dadurch gekennzeichnet, daß die Empfangseinrichtungen weiterhin erste und zweite Frequenzauswahleinrichtungen (30, 35) einschließen, die zum Empfang der die die ersten und zweiten Polarisationssignalkomponenten darstellenden Signale von den ersten bzw. zweiten Mischereinrichtungen (26, 34) angeschaltet sind, um Signale innerhalb eines vorgegebenen Frequenzbandes auszuwählen.

4. Detektor nach Anspruch 2 oder 3, dadurch gekennzeichnet, daß die Empfanseinrichtungen weiterhin erste zwischen den Generatoreinrichtungen (13) und den ersten Antenneneinrichtungen (25) eingeschaltete Einrichtungen (22) zum Phasenverschieben von Signalen einschließen.

5. Detektor nach Anspruch 2, 3 oder 4, dadurch gekennzeichnet, daß die Empfangseinrichtungen weiterhin zwischen den Generatoreinrichtungen (13) und den ersten und zweiten Antenneneinrichtungen (25, 21) eingeschaltete Einrichtungen (14) zur Änderung der diesen zugeführten Leistung einschließen.

6. Detektor nach einem der vorhergehenden Ansprüche, dadurch gekennzeichnet, daß die Verarbeitungseinrichtungen (12) erste und zweite mit den Empfangseinrichtungen gekoppelte Detektoreinrichtungen (31, 36) zur Bestimmung der Amplitude von ersten und zweiten darstellenden Signalen, die von den Empfangseinrichtungen empfangen werden, erste und zweite mit den ersten bzw. zweiten Detektoreinrichtungen (31, 36) gekoppelte Quadriereinrichtungen (38, 37) zum Quadrieren von Signalen, die von den ersten und zweiten Detektoreinrichtungen (31, 36) empfangen werden, und zur Lieferung erster und zweiter quadrierter Signale, mit den ersten und zweiten Quadriereinrichtungen (38, 37) gekoppelte Subtrahiereinrichtungen (41) zum Subtrahieren des zweiten quadrierten Signals von dem ersten quadrierten Signal, mit den ersten und zweiten Quadriereinrichtungen (38, 37) gekoppelte Summiereinrichtungen (33) zum Summieren der ersten und zweiten quadrierten Signale, erste mit den Empfangseinrichtungen gekoppelte Multipliziereinrichtungen (42) zum Multiplizieren des ersten darstellenden Signals mit dem zweiten darstellenden Signal, zweite mit den Empfangseinrichtungen gekoppelte Phasenschiebereinrichtungen (46) zum Phasenverschieben des zweiten darstellenden Signals um 90°, zweite mit den zweiten Phasenschiebereinrichtungen (46) sowie mit den Empfangseinrichtungen gekoppelte Multipliziereinrichtungen (50) zum Multiplizieren der Signale von den zweiten Phasenschiebereinrichtungen mit dem ersten darstellenden Signal, erste mit den ersten Multipliziereinrichtungen (42) gekoppelte Verstärkereinrichtungen (44) zum Verstärken des Ausganges der ersten Multipliziereinrichtungen, und zweite mit den zweiten Multipliziereinrichtungen (50) gekoppelte Verstärkereinrichtungen (52) zum Verstärken des Ausganges der zweiten Multipliziereinrichtungen (50) umfassen.

7. Detektor nach Anspruch 6, dadurch gekennzeichnet, daß die Verarbeitungseinrichtungen (12) weiterhin dritte zwischen den ersten Verstärkereinrichtungen (42) und den ersten Verstärkereinrichtungen (44) eingeschaltete Frequenzauswahleinrichtungen (43) zur Auswahl von Frequenzen innerhalb eines vorgegebenen Bandes, und vierte, zwischen den zweiten Multipliziereinrichtungen (50) und den zweiten Verstärkereinrichtungen (52) eingeschaltete Frequenzauswahleinrichtungen (51) zur Auswahl von Frequenzen innerhalb eines vorgegebenen Frequenzbandes einschließen.

8. Detektor nach Anspruch 6 oder 7, dadurch gekennzeichnet, daß die Verarbeitungseinrichtungen (12) weiterhin erste zwischen den ersten Quadriereinrichtungen (38) und den Summier- und Subtrahiereinrichtungen eingeschaltete Integratoreinrichtungen (32) zur Integration von Signalen, zweite zwischen den zweiten Quadriereinrichtungen (37) und den Summier- und Subtrahiereinrichtungen eingeschaltete Integratoreinrichtungen (40) zum Integrieren von Signalen, dritte mit den ersten Verstärkereinrichtungen (44) gekoppelte Integratoreinrichtungen (45) zur Integration von Signalen und vierte mut den zweiten Verstärkereinrichtungen (52) gekoppelte Integratoreinrichtungen (53) zur Integration von Signalen einschließen.

9. Radar-Zielpolarisationsdetektor mit Empfangseinrichtungen (111, 120, 127) zum Empfang von elektromagnetischen Signalen, die eine Vielzahl von Signalkomponenten aufweisen, die jeweils nicht identische vorgegebene Polarisationen haben, und mit Verarbeitungseinrichtungen (113), die mit den Empfangseinrichtungen (111, 120, 127) zur Verarbeitung der empfangenen Signale gekoppelt sind, dadurch gekennzeichnet, daß der Detektor weiterhin mit den Empfangseinrichtungen (111, 120, 127) gekoppelte Modifikationseinrichtungen (112) zur Modifikation der empfangenen Signale entsprechend vorher ausgewählter Polarisationswinkel und relativer Phasenverschiebungen zur Lieferung von modifizierten darstellenden Signalen aufweist, daß die Verarbeitungseinrichtungen (113) mit den Signalmodifikationseinrichtungen zur Verarbeitung der modifizierten darstellenden Signale zur Ausbildung von Abschätzungen der der Polarisation der empfangenen Signale entsprechenden Stoke'schen Parameter ($s_0$, $s_1$, $s_2$, $s_3$) und zur Lieferung von Signalen gekoppelt sind, die die Abschätzungen der Stokes'schen Parameter ($s_0$, $s_1$, $s_2$, $s_3$) darstellen, und daß mit den Verarbeitungseinrichtungen Einrichtungen zum Vergleich der die Stokes'schen Parameter darstellenden Signale mit vorgegebenen Schwellwertsignalen gekoppelt sind.

10. Detektor nach einem der vorhergehenden Ansprüche, dadurch gekennzeichnet, daß die empfangenen elektromagnetischen Signale quasi-monochromatisch sind.

11. Detektor nach Anspruch 9 oder 10, dadurch gekennzeichnet, daß die Empfangseinrichtungen erste, auf eine erste vorgegebene Polarisationskomponente der elektromagnetischen Signale ansprechende Antenneneinrichtungen (127) und zweite Antenneneinrichtungen (120) einschließen, die auf eine zweite Polarisationskomponente der elektromagnetischen Signale ansprechen, die im wesentlichen orthogonal zu der ersten vorgegebenen Polarisation ist, daß die Empfangs einrichtungen weiterhin Einrichtungen (116) zur Erzeugung linearer frequenzmodulierter Signale, Einrichtungen zum Anschalten der Generatoreinrichtungen an die ersten und zweiten Antenneneinrichtungen (127, 120), wobei ein lineares frequenzmoduliertes Signale von den ersten und zweiten Antenneneinrichtungen ausgestrahlt und empfangen wird und erste und zweite Mischereinrichtungen (130, 121) umfassen, die mit den ersten bzw. zweiten Antenneneinrichtungen (127, 120) sowie mit den Generatoreinrichtungen (116) gekoppelt sind, um einen Teil der erzeugten linearen frequenzmodulierten Signale und der empfangenen linearen frequenzmodulierten Signale zu mischen und um erste und zweite Signale zu erzeugen, die die ersten und zweiten Polarisationssignalkomponenten darstellen, und daß diese darstellenden Signale den Signalmodifikationseinrichtungen (112) zugeführt werden.

12. Detektor nach Anspruch 11, dadurch gekennzeichnet, daß die Signalmodifikationseinrichtungen (112) erste und zweite Eingangsanschlußeinrichtungen (112b, 112a), mit den ersten Eingangsanschlußeinrichtungen gekoppelte Einrichtungen (136) zum Verzögern des ersten darstellenden Signals, Einrichtungen (134) zur Erzeugung von Signalen, die den Sinus von vorausgewählten Polarisationswinkeln darstellen, erste mit dem Sinusgenerator und den Verzögerungseinrichtungen gekoppelte Multipliziereinrichtungen (135) zur Multiplikation der verzögerten Signale mit den den Sinus darstellenden Signalen, Einrichtungen (132) zur Erzeugung von Signalen, die den Kosinus der verausgewählten. Polarisationswinkel darstellen, und zweite Multipliziereinrichtungen (133) einschließen, die mit dem Kosinusgenerator und den zweiten Eingangsanschlußeinrichtungen gekoppelt sind und die zweiten darstellenden Signale mit den den Kosinus darstellenden Signalen multiplizieren.

13. Detektor nach einem der Ansprüche 9 bis 12, dadurch gekennzeichnet, daß die Signalmodifikationseinrichtungen erste und zweite Eingangsanschlußeinrichtungen (112b, 112a), erste und zweite Ausgangsanschlußeinrichtungen (112d, 112c), mit den ersten Eingangsanschlußeinrichtungen (112b) gekoppelte Einrichtungen (146) zur Verzögerung des ersten empfangenen Signals, zwischen den Verzögerungseinrichtungen (146) und den ersten Ausgangsanschlußeinrichtungen (112d) eingeschaltete Abschwächereinrichtungen (147) zur Änderung der Amplitude der verzögerten Signale, mit den zweiten Eingangsanschlußeinrichtungen (112a) gekoppelte Einrichtungen (148) zur Invertierung eines zweiten empfangenen Signals, zweite Abschwächereinrichtungen (150) zur Änderung der Amplitude der ihm zugeführten Signale, und mit den Invertiereinrichtungen (148) gekoppelte Einrichtungen (149) zur schaltbaren Zuführung eines invertierten abgeschwächten Signals und eines nicht invertierten abgeschwächten Signals an die Ausgangsanschlußeinrichtungen der Signalmodifikationseinrichtungen umfassen.

14. Detektor nach Anspruch 9, dadurch gekennzeichnet, daß die Verarbeitungseinrichtungen (113) mit den Signalmodifikationseinrichtungen gekoppelte Einrichtungen (140) zur Summierung der modifizerten darstellenden Signale, mit den Summiereinrichtungen (140) gekoppelte Detektoreinrichtungen (142) zur Bestimmung der Amplitude der summierten Signale, mit den Detektoreinrichtungen (142) gekoppelte Einrichtungen (143) zum Quadrieren von von den Detektoreinrichtungen empfangenen Signalen zur Lieferung von intensitätsdarstellenden Signalen, und mit den Quadriereinrichtungen (143) gekoppelte Recheneinrichtungen (145) umfassen, die Abschätzungen der Stoke'schen Parameter ($s_0$, $s_1$, $s_2$, $s_3$) darstellende Signale aus den intensitätsdarstellenden Signalen ermitteln.

15. Detektor nach Anspruch 14, dadurch gekennzeichnet, daß er weiterhin zwischen den Summiereinrichtungen (140) und den Detektoreinrichtungen (142) eingeschaltete Einrichtungen (141) zur Auswahl von Signalen mit Frequenzen innerhalb eines vorgegebenen Frequenzbandes einschließt.

16. Detektor nach Anspruch 14, dadurch gekennzeichnet, daß er weiterhin zwischen den Quadriereinrichtungen (143) und den Recheneinrichtungen (145) eingeschaltete Einrichtungen (144) zur Integration der intensitätsdarstellenden Signale aufweist.

17. Verfahren zur Feststellung des Vorhandenseins eines Radarziels, das in Störziele eingetaucht ist, wobei das Verfahren die Schritte Anstrahlung des Radarziels mit elektromagnetischer Strahlung zur Lieferung eines von dem Ziel reflektierten Signals, des Empfangs von elektromagnetischen Strahlungssignalkomponenten des reflektierten Signals, die vorgegebene nicht identische Polarisationen aufweisen, der Lieferung von die Signalkomponenten darstellenden Signale und der Verarbeitung dieser darstellenden Signale umfaßt, dadurch gekennzeichnet, daß der Verarbeitungsschritt derart erfolgt, daß Abschätzungen der Stokes'schen Parameter ($s_0$, $s_1$, $s_2$, $s_3$) ausgebildet werden, die der Polarisation der Signalkomponenten entsprechen, und daß Signale geliefert werden, die die Darstellungen der Abschätzungen der Stokes'schen Parameter darstellen, und daß das Verfahren den weiteren Schritt des Vergleichs der die Abschätzungen der Stokes'schen Parameter darstellenden Signale mit vorgegebenen Schwellwertsignalen zur Lieferung von Signalen umfaßt, die diejenigen der die Abschätzungen der Stokes'schen Parameter ($s_0$, $s_1$, $s_2$, $s_3$) darstellenden Signale anzeigen, die einen Signalpegel aufweisen, der größer als der der Schwellwertsignale ist.

18. Verfahren nach Anspruch 17, dadurch gekennzeichnet, daß die empfangenen Signalkomponenten erste Signalkomponenten des reflektierten Signals mit einer ersten vorgegebenen Polarisation und zweite Signalkomponenten des reflektierten Signals mit einer zweiten vorgegebenen Polarisation umfassen, die im wesentlichen orthogonal zu der ersten vorgegebenen Polarisation ist.

19. Verfahren nach Anspruch 17 oder 18, dadurch gekennzeichnet, daß der Verarbeitungsschritt die folgenden Schritte umfaßt: Feststellen der Amplitude $A_h(t)$ eines ersten darstellenden Signals, Feststellen der Amplitude $A_v(t)$ eines zweiten darstellenden Signals, Quadrieren der ersten und zweiten hinsichtlich ihrer Amplitude ermittelten Signale zur Lieferung erster und zweiter quadrierter Signale, Subtrahieren des zweiten quadrierten Signals von dem ersten quadrierten Signal zur Bestimmung des Signals $A_h^2(t)—A_v^2(t)$, Addieren der ersten und zweiten quadrierten Signale zur Bestimmung des Signals $A_h^2(t)+A_v^2(t)$, Phasenverschieben des zweiten darstellenden Signals um 90°, Multiplizieren des phasenverschobenen Signals mit dem ersten darstellenden Signal, Filtern des Produktes des ersten darstellenden Signals und des phasenverschobenen Signals, um den Ausdruck des Produktes auszuwählen, der dem Sinus der Phasendifferenz der ersten und zweiten Signalkomponenten entspricht, Verstärken des Sinusausdruckes um einen Faktor von vier, so daß das Signal $A_h(t)\ A_v(t) \sin (\varphi_h(t)—\varphi_v(t))$ bestimmt wird, Multiplizieren der ersten und zweiten darstellenden Signale, Filtern des Produktes der ersten und zweiten darstellenden Signale Zur Auswahl des Ausdruckes des Produktes, das dem Kosinus der Phasendifferenz der ersten und zweiten Signale entspricht, und Verstärken des Kosinusausdruckes um einen Faktor von vier, wodurch das Signal $A_h(t)\ A_v(t) \cos (\varphi_h(t)—\varphi_v(t))$ bestimmt ist.

20. Verfahren nach Anspruch 19, gekennzeichnet durch den weiteren Schritt der Integration der Signale $A_h^2(t)$, $A_v^2(t)$, $A_h(t) \cdot A_v(t) \cos (\varphi_h(t)—\varphi_v(t))$ und $A_h(t) \cdot A_v(t) \sin (\varphi_h(t)—\varphi_v(t))$.

21. Verfahren zur Festellung des Vorhandenseins eines Radarziels, das in Störziele eingebettet ist, wobei das Verfahren die Schritte der Anstrahlung des Radarziels mit zumindestens zwei elektromagnetischen Signalen mit nicht identischen Polarisationen, den Empfang elektromagnetischer Signalkomponenten von empfangenen Signalen von dem Ziel mit nicht identischen Polarisationen und die Verarbeitung der empfangenen Signale umfaßt, dadurch gekennzeichnet, daß das Verfahren die weiteren Schritte der Modifikation der empfangenen Signale entsprechend vorausgewählter Phasenverschiebungen und Polarisationswinkel zur Lieferung von modifizierten darstellenden Signalen, die Verarbeitung der modifizierten darstellenden Signale zur Ausbildung von Abschätzungen der Stokes'schen Parameter ($s_0$, $s_1$, $s_2$, $s_3$), die der Polarisation der Signalkomponenten entsprechen, und zur Lieferung von Signall, die die Abschätzungen der Stokes'schen Parameter darstellen, und des Vergleichs der die Stokes'schen Parameter darstellenden Signale mit vorgegebenen Schwellwertsignalen umfaßt.

22. Verfahren nach einem der Anspruch 17 bis 21, dadurch gekennzeichnet, daß die anstrahlende und die empfangende elektromagnetische Strahlung quasi-monochromatisch ist.

23. Verfahren nach Anspruch 21, dadurch gekennzeichnet, daß die empfangenen Signalkomponenten eine erste Signalkomponente des reflektierten Signals mit einer ersten vorgebenen Polarisation und eine zweite Signalkomponente des reflektierten Signals mit einer zweiten vorgegebenen Polarisation umfassen, die im wesentlichen orthogonal zu der ersten vorgegebenen Polarisation ist.

24. Verfahren nach einem der Anspruch 21 bis 23, dadurch gekennzeichnet, daß der Schritt der Signalmodifikation die Schritte der Auswahl von Polarisationswinkeln $\theta$ und Phasenverschiebungen $\varepsilon$ zur Ausbildung einer Vielzahl von Meßpaaren $(\theta,\varepsilon)$, der Phasenverschiebung der ersten Signalkomponente um eine der Phasenverschiebungen $\varepsilon$, der Erzeugung eines Signals, das den Sinus des ausgewählten Polaritätswinkels $\theta$, der mit der einen Phasenverschiebung $\varepsilon$ gepaart ist, darstellt, der Erzeugung eines Signals, das den Kosinus des ausgewählten Polaritätswinkels $\theta$, der mit der einen Phasenverschiebung $\varepsilon$ gepaart ist, darstellt, der Multiplikation des verzögerten Signals mit dem den Sinus darstellenden Signal, und der Multiplikation der zweiten Signalkomponente mit dem den Kosinus darstellenden Signal unfaßt, so daß erste und zweite modifizierte Signale geliefert werden.

25. Verfahren nach einem der Ansprüche 21 bis 23, dadurch gekennzeichnet, daß der Schritt der Signalmodifikation die folgenden Schritte umfaßt: Auswählen von Polarisationswinkeln $\theta$ und Phasenverschiebungen $\varepsilon$ zur Ausbildung einer Vielzahl von Meßpaaren $(\theta,\varepsilon)$, der Phasenverschiebung der ersten Signalkomponenten um eine der Phasenverschiebungen $\varepsilon$, der

Abschwächung der Amplitude des verzögerten Signals entsprechend dem Sinus des ausgewählten Polarisationswinkels $\theta$, der mit der einen Phasenverschiebung $\varepsilon$ gepaart ist, der Abschwächung der Amplitude des zweiten darstellenden Signals entsprechend dem Kosinus des ausgewählten Polarisationswinkels $\theta$, der mit der einen Phasenverschiebung $\varepsilon$ gepaart ist, und der Invertierung des zweiten darstellenden Signals entsprechend dem Kosinus des vorausgewählten Polarisationswinkels $\theta$, der mit der ersten Phasenverschiebung $\varepsilon$ gepaart ist, wodurch die ersten und zweiten modifizierten Signale geliefert werden.

26. Verfahren nach einem der Ansprüche 21 bis 23, dadurch gekennzeichnet, daß der Schritt der Verarbeitung für die folgenden Meßpaare durchgeführt wird: (0°, 0), (45°, 0), (90°, 0), (135°, 0), (45°, $\pi/2$) und (135°, $\pi/2$).

27. Verfahren nach Anspruch 26, dadurch gekennzeichnet, daß der Schritt der Verarbeitung die folgenden Schritte umfaßt: Summieren der ersten und zweiten modifizierten Signale zur Lieferung eines summierten Signals, Feststellen der Amplitude $|E(t;\theta,\varepsilon)|$ des summierten Signals, Quadrierten des summierten Signals zur Lieferung von intensitätsdarstellenden Signalen $I(\theta,\varepsilon)=|E(t;\theta,\varepsilon)|^2$, wodurch die intensitätsdarstellenden Signale I(0°, 0), I(45°, 0), I(90°, 0), I(135°, 0), I(45°, $\pi/2$) und I(135°, $\pi/2$) ausgebildet werden, sowie die Schritte der Summierung des intensitätsdarstellenden Signals I(0°, 0) und I(90°, 0) zur Bestimmung des Signals I(0°, 0)+I(90°, 0) der Subtraktion des intensitätsdarstellenden Signals I(09°, 0) von dem intensitätsdarstellenden Signal I(0°, 0) zur Bestimmung des Signals I(0°, 0)—I(90°, 0), der Subtraktion des intensitätsdarstellenden Signals I(135°, 0) von dem intensitätsdarstellenden Signal I(45°, 0) zur Bestimmung des Signals I(45°, 0)—I(135°, 0) und der Subtraktion des intensitätsdarstellenden Signals I(135°, $\pi/2$) von dem intensitätsdarstellenden Signal I(45°, $\pi/2$) zur Bestimmung des Signals I(45°, $\pi/2$)—I(135°, $\pi/2$).

28. Verfahren nach Anspruch 27, gekennzeichnet durch den weiteren Schritt der Integration der intensitätsdarstellenden Signale, wodurch abschätzungen der Stokes'schen Paramter ($s_0$, $s_1$, $s_2$, $s_3$) gewonnen werden.

29. Verfahren nach Anspruch 28, gekennzeichnet durch den weiteren Schritt der Filterung des summierten Signals.

## Revendications

1. Détecteur de polarisation radar comprenant un dispositif de réception (11, 21, 25) destiné à recevoir des signaux électromagnétiques ayant plusieurs composantes ayant chacune des polarisations prédéterminées non identiques afin que des signaux représentatifs des composantes du signal reçusoient formés, et un processeur (12) couplé au dispositif de réception et destiné à traiter les signaux représentatifs, caractérisé en ce que le processeur (12) est destiné à établir des estimations des paramètres de Stokes ($s_0$, $s_1$, $s_2$, $s_3$) correspondant à la polarisation des signaux et à transmettre des signaux représentatifs des estimations des paramètres de Stokes ($s_0$, $s_1$, $s_2$, $s_3$) et un dispositif (54) couplé au processeur est destiné à comparer les signaux représentatifs des estimations des paramètres de Stokes ($s_0$, $s_1$, $s_2$, $s_3$) à des signaux prédéterminés de seuil et à transmettre des signaux indicatifs des signaux représentatifs des valeurs estimées des paramètres de Stokes ($s_0$, $s_1$, $s_2$, $s_3$) ayant un niveau de signal supérieur aux signaux respectifs de seuil.

2. Détecteur selon la revendication 1, caractérisé en ce que le dispositif de réception comporte une première antenne (25) sensible à une première composante de polarisation prédéterminée des signaux électromagnétiques, une seconde antenne (21) sensible à une seconde composante de polarisation des signaux électromagnétiques, sensiblement orthogonale à la première polarisation prédéterminée, et le dispositif de réception comporte en outre un générateur (13) de signaux linéaires modulés en fréquences, un dispositif de couplage du générateur (13) à la première et à la seconde antenne (25, 21) de manière que le signal linéaire soit transmis et reçu par la première et la seconde antenne, et un premier et un second mélangeur (26, 34) couplés respectivement à la première et à la seconde antenne et au générateur et destinés à mélanger une partie des signaux linéaires créés et des signaux linéaires reçus afin qu'ils forment des premiers et seconds signaux représentatifs de composantes à la première et à la seconde polarisation, les signaux représentatifs étant couplés au processeur (12).

3. Détecteur selon la revendication 2, caractérisé en ce que le dispositif de réception comporte en outre un premier et un second dispositif de sélection de fréquence (30, 35) couplés afin qu'ils reçoivent les signaux représentatifs du premier et du second mélangeur (26, 34) respectivement et qu'ils sélectionnent les signaux contenus dans une bande prédéterminée.

4. Détecteur selon l'une des revendications 2 et 3, caractérisé en ce que le dispositif de réception comporte en outre un premier dispositif (22) couplé entre le générateur (13) et la première antenne (25) et destiné à déphaser les signaux.

5. Détecteur selon l'une quelconque des revendications 2 à 4, caractérisé en ce que le dispositif de réception comprend en outre un dispositif (14) monté entre la générateur (13) et la première et la seconde antenne (25, 21) et destiné à faire varier la puissance qui leur est couplée.

6. Détecteur selon l'une quelconque des revendications précédentes, caractérisé en ce que le processeur (12) comporte un premier et un second dispositif de détection (31, 36) couplés au dispositif de réception et destinés à déterminer l'amplitude des premier et second signaux représentatifs reçus du dispositif de réception, un premier et un second dispositif conformateur (38, 37) couplés respectivement au premier et au second dispositif de détection (31, 36) et destinés à conformer les signaux reçus du premier et du second dispositif de détection (31, 36) et à former des premier et second signaux conformés, un dispositif de soustraction (41) relié au premier et au second dispositif conformateur (38, 37) et destiné à soustraire le second signal conformé du premier, un dispositif de sommation (33) couplé aux premier et second dispositif conformateur (38, 37) et destiné à à additionner les premier et second signaux conformés, un premier dispositif multiplicateur (42) couplé au dispositif de réception et destiné à multiplier le premier signal représentatif par le second signal représentatif, un second dispositif déphaseur (46) couplé au dispositif de réception et destiné à déphaser le second signal représentatif de 90°, un second dispositif multiplicateur (50) couplé au second dispositif déphaseur (46) et couplé aussi au dispositif de réception, afin qu'il multiplie les signaux provenant du second dispositif déphaseur par le premier signal représentatif, et un premier amplificateur (44) couplé au premier dispositif multiplicateur (42) et destiné à amplifier le signale de sortie de ce dernier, et un second amplificateur (52) couplé au second dispositif multiplicateur (50) et destiné à amplifier le signal de sortie de ce dernier.

7. Détecteur selon la revendication 6, caractérisé en ce que le processeur (12) comporte en outre un troisième dispositif de sélection de frèquences (43) monté entre le premier dispositif multiplicateur (42) et le premier amplificateur (44) et destiné à sélectionner des fréquences contenues dans une bande prédéterminée, et un quatrième dispositif de sélection de fréquences (51) monté entre le second dispositif multiplicateur (50) et le second amplificateur (52) et destiné à sélectionner des fréquences contenues dans une bande prédéterminée.

8. Détecteur selon l'une des revendications 6 et 7, caractérisé en ce que le processeur (12) comporte en outre un premier intégrateur (32) monté entre le premier dispositif conformateur (38) et les dispositifs de sommation et de soustraction et destiné à intégrer les signaux, un second intégrateur (40) monté entre le second dispositif conformateur (37) et les dispositifs sommateur et soustracteur afin qu'il intègre les signaux, un troisième intégrateur (45) relié au premier amplificateur (44) et destiné à intégrer les signaux, et un quatrième intégrateur (53) relié au second amplificateur (52) et destiné à intégrer les signaux.

9. Détecteur de polarisation de signaux d'une cible radar, comprenant un dispositif de réception (111, 120, 127) destiné à recevoir des signaux électromagnétiques ayant plusieurs composantes ayant chacune des polarisations prédéterminées non identiques, et un processeur (113) couplé au dispositif de réception (111, 120, 127) et destiné à traiter les signaux reçus, caractérisé en ce qu'il comporte en outre un dispositif modificateur (112) couplé au dispositif de réception (111, 120, 127) et destiné à modifier les signaux reçus en fonction de déphasages et d'angles de polarisations prédéterminées afin qu'il forme des signaux représentatifs modifiés, le processeur (113) étant couplé au dispositif de modification de signaux afin qu'il traite les signaux représentatifs modifiés et établisse des estimations des paramètres de Stokes ($s_0$, $s_1$, $s_2$, $s_3$) correspondant à la polarisation des signaux reçus et à transmettre des signaux représentatifs desdites estimations des paramètres de Stokes ($s_0$, $s_1$, $s_2$, $s_3$), et un dispositif couplé au processeur et destiné à comparer les signaux représentatifs des paramètres de Stokes à des signaux prédéterminés de seuil.

10. Détecteur selon l'une quelconque des revendications précédentes, caractérisé en ce que les signaux électromagnétiques reçus sont quasimonochromatiques.

11. Détecteur selon l'une des revendications 9 et 10, caractérisé en ce que le dispositif de réception comporte une première antenne (127) sensible à une composante des signaux électromagnétiques ayant une première polarisation prédéterminé, une seconde antenne (120) sensible à une composante des signaux électromagnétique ayant une seconde polarisation sensiblement perpendiculaire à la première polarisation prédéterminée, et le dispositif de réception comporte en outre un dispositif (116) générateur de signaux linéaires modulés en fréquences, un dispositif destiné à relier le dispositif générateur à la première et à la seconde antenne (127, 120) de manière qu'un signal linéaire modulé en fréquence soit transmis et reçu par la première et la seconde antenne, et un premier et un second mélangeur (130, 121) reliés respectivement à la première et à la seconde antenne et reliés en outre au générateur (116) afin qu'ils mélangent une partie des signaux linéaires créés et des signaux linéaires reçus afin qu'ils forment des premiers et des seconds signaux représentatifs des composantes ayant la première et la seconde polarisation, les signaux représentatifs étant couplés au dispositif modificateur de signaux (112).

12. Détecteur selon la revendication 11, caractérisé en ce que le dispositif modificateur de signaux (112) comporte une première et une seconde borne d'entrée (112b, 112a), un dispositif (136) relié à la première borne d'entrée et destiné à retarder le premier signal représentatif, un dispositif (134) destiné à créer des signaux représentatifs du sinus des angles prédéterminés de polarisation, une premier dispositif multiplicateur (135) couplé au générateur de sinus et au dispositif à retard et destiné à multiplier les signaux retardés par les signaux représentés du sinus, un dispositif (132) générateur de signaux représentatifs du cosinus des angles prédéterminés de polarisation, et un second dispositif multiplicateur (133) couplé au générateur de cosinus et à la seconde borne d'entrée et destiné à multiplier les seconds signaux représentatifs par les signaux représentatifs du cosinus.

13. Détecteur selon l'une quelconque des revendications 9 à 12, caractérisé en ce que le dispositif modificateur de signaux comporte une première et une seconde borne d'entrée (112b, 112a), une première et une seconde borne de sortie (112d, 112c, un dispositif (146) relié à la première borne d'entrée (112b) et destiné à retarder un premier signal reçu, un premier atténuateur (147) monté entre le dispositif à retard (146) et la première borne de sortie (112d) et destiné à faire varier l'amplitude des signaux retardés, un dispositif (148) couplé à la seconde borne d'entrée (112a) et destiné à inverser un second signal reçu, un second atténuateur (150) destiné à faire varier l'amplitude des signaux qui lui sont appliqués, et un dispositif (149) couplé au dispositif d'inversion (148) et destiné à coupler de façon commutable un signal atténué inversé et un signal atténué non inversé à la borne de sortie du dispositif modificateur de signaux.

14. Détecteur selon la revendication 9, caractérisé en ce que le processeur (113) comporte un dispositif (140) relié au dispositif modificateur de signaux et destiné á additionner les signaux représentatifs modifiés, un dispositif (142) de détection couplé au dispositif de sommation et destiné à déterminer l'amplitude des signaux additionnés, un dispositif (143) couplé au dispositif de détection (142) et destiné à conformer les signaux reçus du dispositif de détection afin qu'il forme des signaux représentatifs d'intensité, et un dispositif de calcul (145) couplé au dispositif conformateur (143) et destiné à établir des signaux représentatifs des estimations des paramètres de Stokes ($s_0$, $s_1$, $s_2$, $s_3$) à partir des signaux représentatifs d'intensité.

15. Détecteur selon la revendication 14, caractérisé en ce qu'il comprend en outre un dispositif (141) monté entre le dispositif sommateur (40) et le dispositif de détection (142) et destiné à sélectionner des signaux à des fréquences contenues dans une bande prédéterminée.

16. Détecteur selon la revendication 14, caractérisé en ce qu'il comprend en outre un dispositif (144) monté entre le dispositif conformateur (143) et le dispositif de calcul (145) et destiné à intégrer les signaux représentatifs d'intensité.

17. Procédé de détection de la présence d'une cible radar enfouie dans un fond continu, comprenant les étapes d'irradiation de la cible radar par un rayonnement électromagnétique afin qu'un signal réfléchi par la cible soit formé, de réception de composantes du rayonnement électromagnétique du signal réfléchi, ayant des polarisations prédéterminées non identiques, de création de signaux représentatifs des composantes, et de traitement des signaux représentatifs, caractérisé en ce que l'étape de traitement est telle qu'elle assure l'établissement d'estimations des paramètres de Stokes ($s_0$, $s_1$, $s_2$, $s_3$) correspondant à la polarisation des composantes et la transmission de signaux représentatifs des estimations des paramètres de Stokes, et en ce que le procédé comprend l'étape supplémentaire de comparaison des signaux représentatifs des estimations des paramètres de Stokes à des signaux prédéterminés de seuil afin que des signaux indicatifs desdits signaux représentatifs des estimations de paramètres de Stokes ($s_0$, $s_1$, $s_2$, $s_3$) ayant un niveau de signal supérieur aux signaux de seuil soient formés.

18. Procédé selon la revendication 17, caractérisé en ce que les composantes des signaux reçus comportent des premières composantes du signal réfléchi ayant une première polarisation prédéterminée, et des secondes composantes du signal réfléchi ayant une seconde polarisation prédéterminée sensiblement perpendiculaire à la première polarisation prédéterminée.

19. Procédé selon l'une des revendications 17 et 18, caractérisé en ce que l'étape de traitement comprend la détection de l'amplitude $A_h(t)$ d'un premier signal représentatif, la détection de l'amplitude $A_v(t)$ d'un second signal représentatif, la conformation des premiers et seconds signaux détectés en amplitude afin qu'un premier et un second signal conformé soient formés, la soustraction du second signal conformé du premier afin qu'un signal $A_h(t)—A_v^2(t)$ soit déterminé, l'addition du premier et du second signal conformé afin que le signal $A_h^2(t)+A_v^2(t)$ soit déterminé, le déphasage de 90° du second signal représentatif, la multiplication du signal déphasé par le premier signal représentatif, le filtrage du produit du premier signal représentatif par le signal déphasé afin que le terme du produit correspondant au sinus du déphasage de la première et de la seconde composante soit sélectionné, l'amplification du terme sinus par un facteur 4 si bien que le signal $A_h(t)$ $A_v(t)$ sin $(\varphi_h(t)—\varphi_v(t))$ est déterminé, la multiplication du premier et du second signal représentatif, le filtrage du produit du premier et du second signal représentatif afin que le terme du produit correspondant au cosinus du déphasage du premier et du second signal soit sélectionné, et l'amplification de ce terme cosinus par un facteur 4, si bien que le signal $A_h(t)$ $A_v(t)$ cos $(\varphi_h(t)—\varphi_v(t))$ est déterminé.

20. Procédé selon la revendication 19, caractérisé en ce qu'il comprend en outre l'étap d'intégration des signaux $A_h^2(t)$, $A_v^2(t)$, $A_h(t)$ $A_v(t)$ cos $(\varphi_h(t)-\varphi_v(t))$ et $A_h(t)$ $A_v(t)$ sin $(\varphi_h(t)-\varphi_v(t))$.

21. Procédé de détection de la présence d'une cible radar enfouie dans un fond continu, comprenant les étapes d'irradiation de la cible radar par au moins deux signaux électromagnétiques ayant des polarisations non identiques, de réception de composantes des signaux électromagnétiques réfléchis par la cible, ayant des polarisations non identiques, et de traitement des signaux reçus, caractérisé en ce que le procédé comprend en outre des étapes de modification des signaux reçus en fonction d'angles de polarisation et de déphasage prédéterminés afin qu'il forme des signaux représentatifs modifiés, de traitement de signaux représentatifs modifiés afin qu'il établisse des estimations des paramètres de Stokes $(s_0, s_1, s_2, s_3)$ correspondant à la polarisation desdites composantes avec formation de signaux représentatifs des estimations des paramètres de Stokes, et de comparaison des signaux représentatifs des paramètres de Stokes à des signaux prédéterminés de seuil.

22. Procédé selon l'une quelconque des revendications 17 à 21, caractérisé en ce que le rayonnement électromagnétique d'irradiation reçu est quasimonochromatique.

23. Procédé selon la revendication 21, caractérisé en ce que les composantes du signal reçu comportent une première composante du signal réfléchi ayant une première polarisation prédéterminée, et une seconde composante du signale réfléchi ayant une seconde polarisation prédéterminée sensiblement perpendiculaire à la première.

24. Procédé selon l'une quelconque des revendications 21 à 23, caractérisé en ce que l'étape de modification de signaux comprend les étapes de sélection d'angle de polarisation $\theta$ et de déphasage $\varepsilon$ afin que plusieurs paires de mesures $(\bar{\theta},\varepsilon)$ soient établies, de déphasage de la première composante de l'un des déphasages $\varepsilon$, de création d'un signal représentatif du sinus de l'angle choisi de polarisation $\theta$ apparié audit déphasage $\varepsilon$, de création d'un signal représentatif du cosinus de l'angle choisi de polarisation $\theta$ apparié audit déphasage $\varepsilon$, de multiplication du signal retardé par le signal représentatif du sinus, et de multiplication de la seconde composante par le signal représentatif du cosinus afin qu'un premier et un second signal modifié soient formés.

25. Procédé selon l'une quelconque des revendications 21 à 23, caractérisé en ce que l'étape de modification de signaux comprend les étapes de sélection d'angles $\theta$ de polarisation et de déphasages $\varepsilon$ afin que plusieurs paires de mesures $(\theta,\varepsilon)$ soient établies, de déphasage de la première composante par l'un des déphasages $\varepsilon$, d'atténuation de l'amplitude du signal retardé d'après le sinus de l'angle choisi de polarisation $\theta$ apparié au premier déphasage $\varepsilon$, d'atténuation de l'amplitude du second signal représentatif en fonction du cosinus de l'angle choisi de polarisation $\theta$ apparié audit déphasage $\varepsilon$, et d'inversion du second signal représentatif en fonction du cosinus de l'angle prédéterminé de polarisation $\theta$ apparié audit déphasage $\varepsilon$, si bien qu'un premier et un second signal modifié sont formés.

26. Procédé selon l'une quelconque des revendications 21 à 23, dans lequel l'étape de traitement est exécutée pour les paires de mesures (0°, 0), (45°, 0), (90°, 0), (135°, 0), (45°, $\pi/2$) et (135°, $\pi/2$).

27. Procédé selon la revendication 26, caractérisé en ce que l'étape de traitement comprend les étapes de sommation des premier et second signaux modifiés afin qu'un signal sommé soit formé, de détection de l'amplitude $|E(t;\theta,\varepsilon)|$ du signal sommé, de conformation du signal somme afin qu'il forme des signaux representatifs d'intensite $I(\theta,\varepsilon)=|E(t;\theta,\varepsilon)|^2$, si bien que les signaux représentatifs d'intensité I(0°,0), I(45°,0), I(90°, 0) I(135°, 0), I(45°, 0, $\pi/2$) et I(135°, $\pi/2$) sont établis, et comprenant en outre les étapes de sommation du signal représentatif d'intensité I(0°, 0) et I(90°, 0) afin que le signal I(0°, 0)+I(90°, 0) soit déterminé, de soustraction du signal représentatif d'intensité I(90°, 0) du signal représentatif d'intensité I(0°, 0) afin que le signal I(0°, 0)—I(90°, 0) soit déterminé de soustraction du signal représentatif d'intensité I(135°, 0) du signal représentatif d'intensité I(45°, 0) afin que le signal I(45°, 0)—I(135°, 0) soit déterminé, et de soustraction du signal représentatif d'intensité I(135°, $\pi/2$) du signal représentatif I(45°, $\pi/2$) afin que le signal I(45°, $\pi/2$)—I(135°, $\pi$2) soit déterminé.

28. Procédé selon la revendication 27, caractérisé en ce qu'il comprend en outre l'intégration des signaux représentatifs d'intensité de manière que des estimations des paramètres de Stokes $(s_0, s_1, s_2$ et $s_3)$ soient obtenues.

29. Procédé selon la revendication 28, caractérisé en ce qu'il comprend en outre le filtrage du signal sommé.

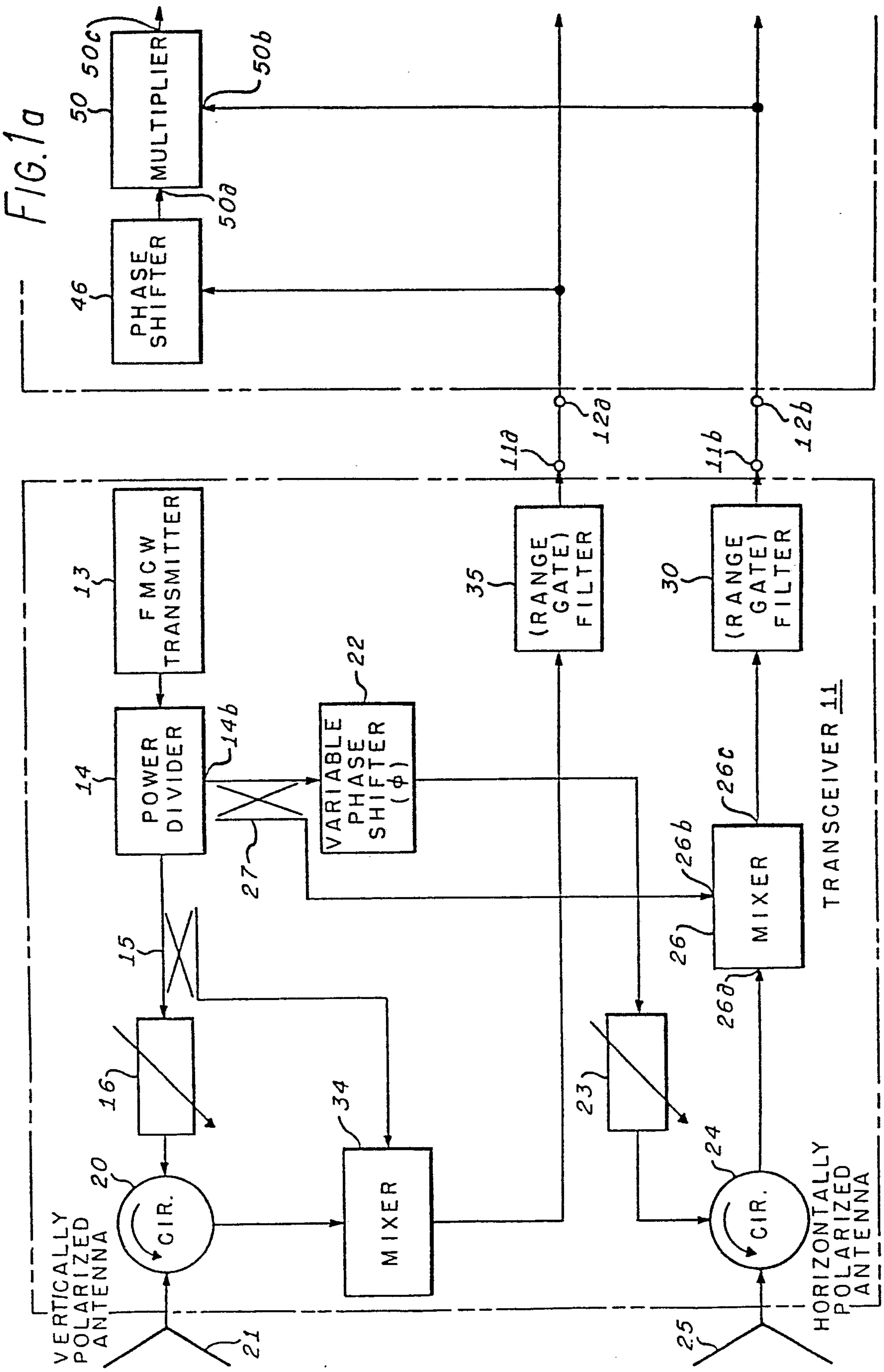
MULTIPLIER
50
50c
50b
50a
PHASE SHIFTER
46
FMCW TRANSMITTER
13
POWER DIVIDER
14
14b
VARIABLE PHASE SHIFTER (φ)
22
27
15
16
20
CIR.
VERTICALLY POLARIZED ANTENNA
21
MIXER
34
(RANGE GATE) FILTER
35
30
11a
12a
11b
12b
MIXER
26
26a
26b
26c
23
24
CIR.
HORIZONTALLY POLARIZED ANTENNA
25
TRANSCEIVER 11
FIG.1a

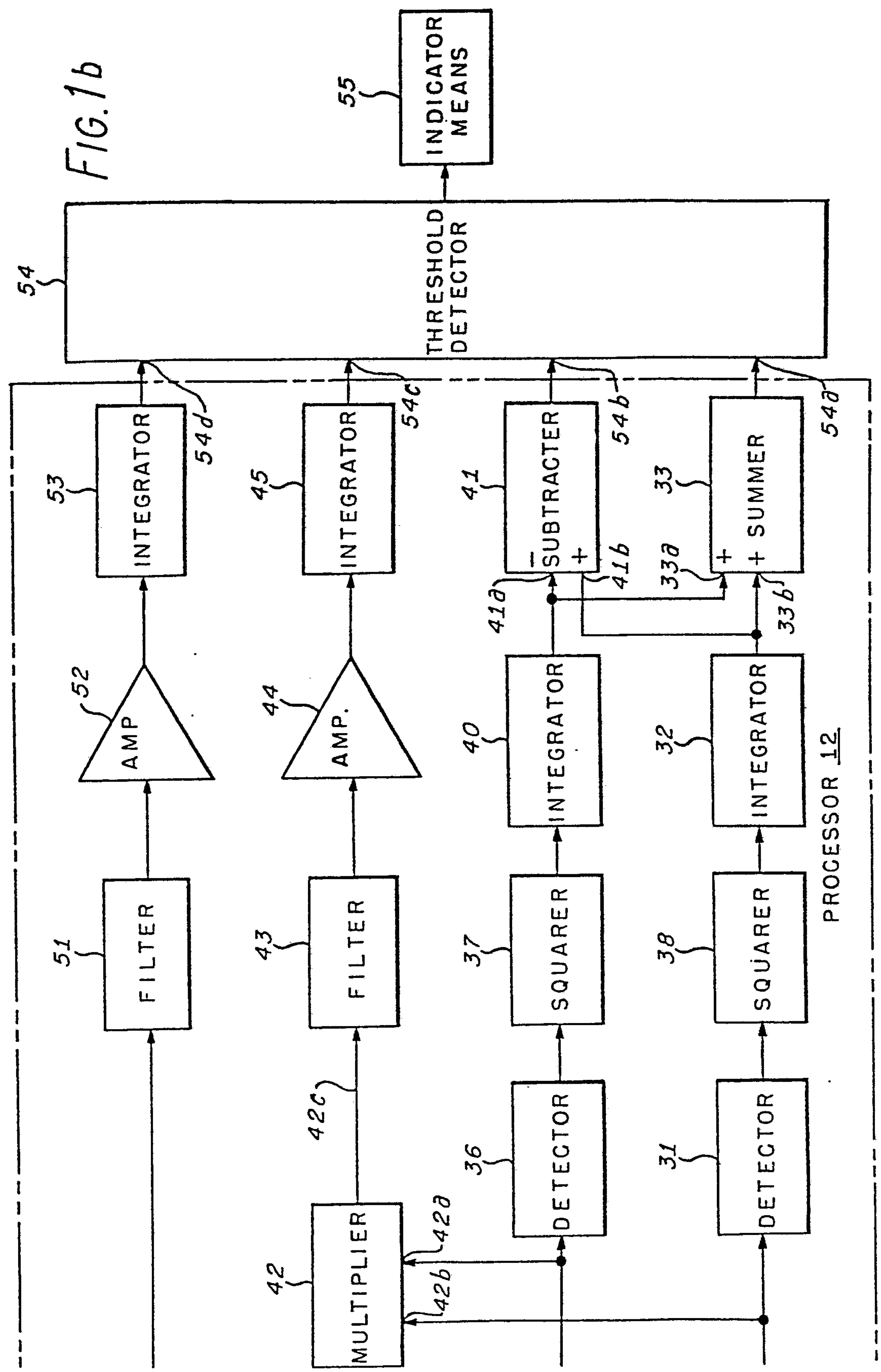
INDICATOR MEANS
55
THRESHOLD DETECTOR
54
54a
54b
54c
54d
INTEGRATOR
53
INTEGRATOR
45
SUBTRACTER
41
41a
41b
SUMMER
33
33a
33b
AMP
52
AMP.
44
INTEGRATOR
40
INTEGRATOR
32
FILTER
51
FILTER
43
SQUARER
37
SQUARER
38
PROCESSOR 12
42c
DETECTOR
36
DETECTOR
31
MULTIPLIER
42
42a
42b

FIG.1b

FIG. 2

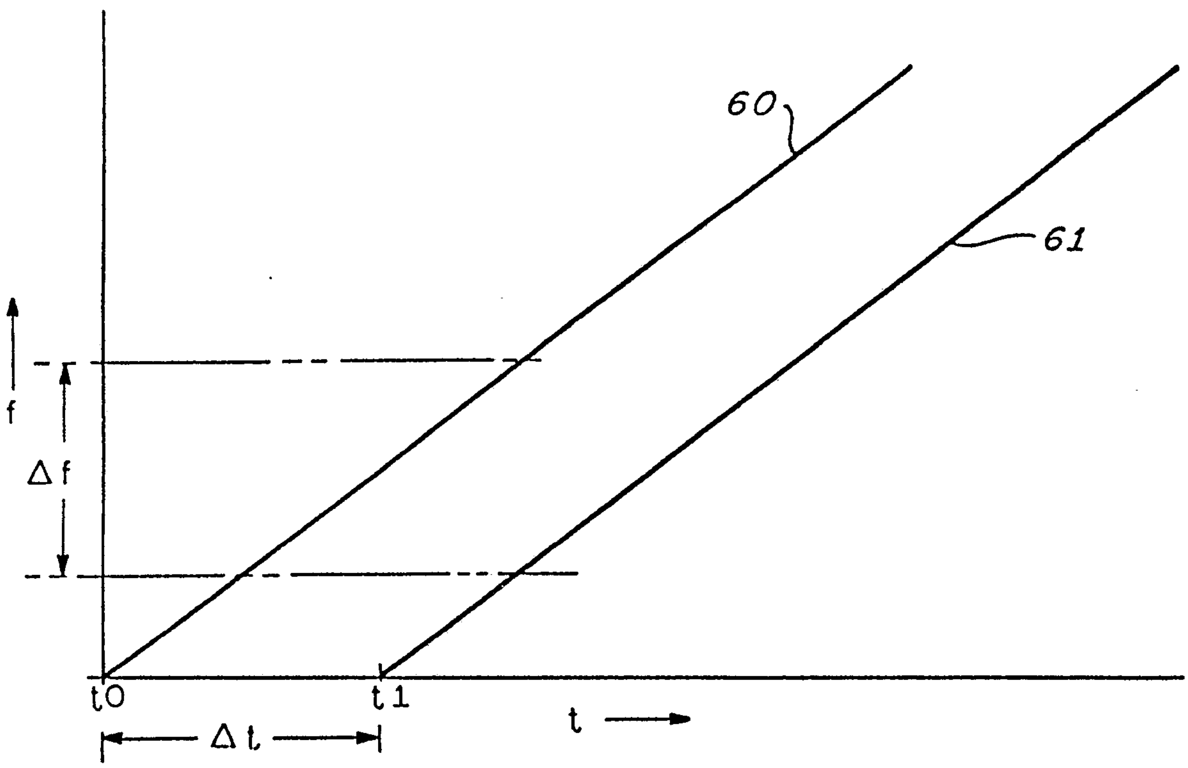

FIG. 3a

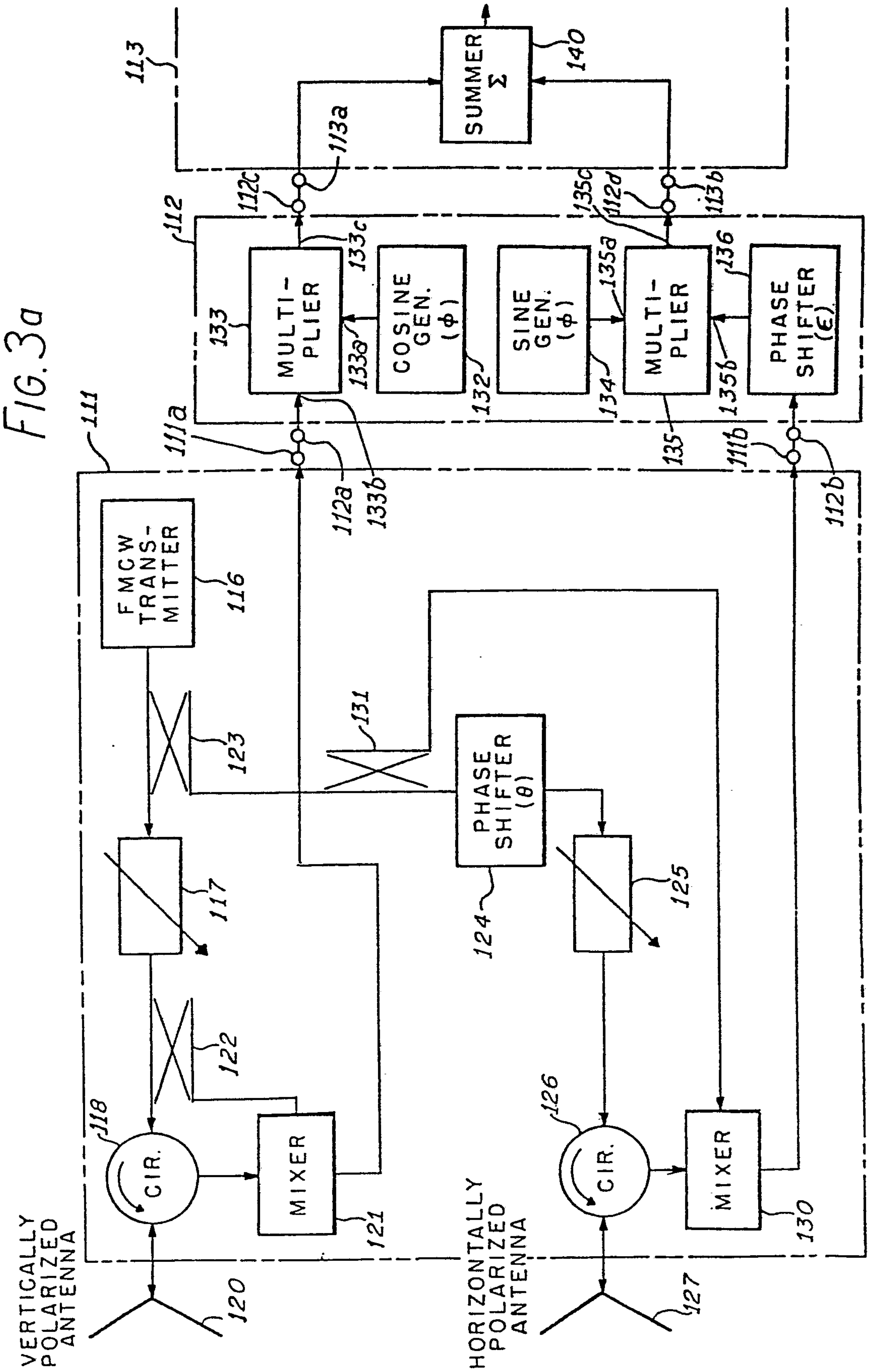

FMCW TRANS-MITTER
PHASE SHIFTER (θ)
MULTI-PLIER
COSINE GEN. (φ)
SINE GEN. (φ)
MULTI-PLIER
PHASE SHIFTER (ε)
SUMMER Σ
CIR.
MIXER
CIR.
MIXER
VERTICALLY POLARIZED ANTENNA
HORIZONTALLY POLARIZED ANTENNA
111
111a
111b
112
112a
112b
112c
112d
113
113a
113b
116
117
118
120
121
122
123
124
125
126
127
130
131
132
133
133a
133b
133c
134
135
135a
135b
135c
136
140

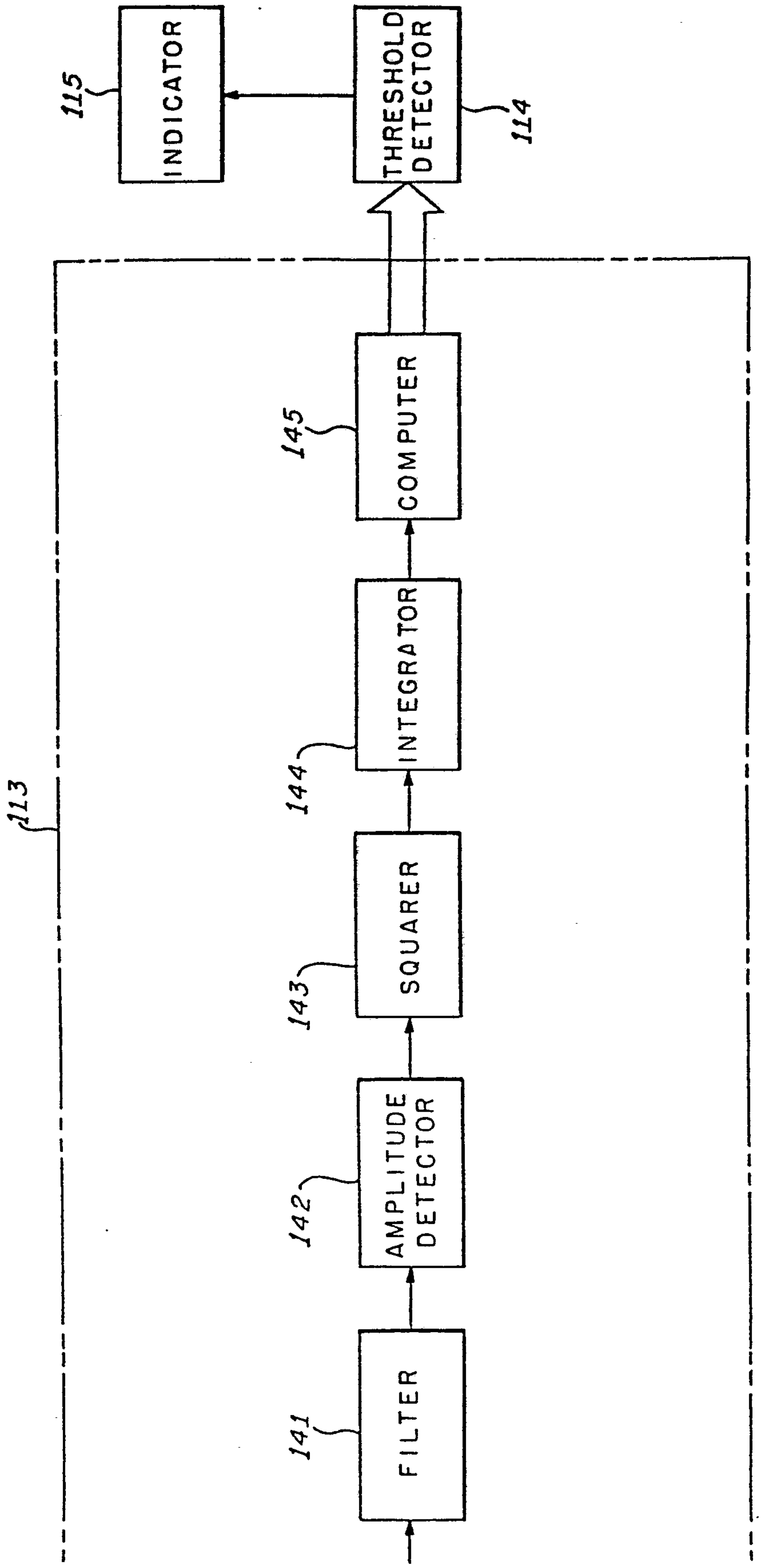
INDICATOR
THRESHOLD DETECTOR
COMPUTER
INTEGRATOR
SQUARER
AMPLITUDE DETECTOR
FILTER
115
114
113
145
144
143
142
141

FIG. 3b

FIG.4

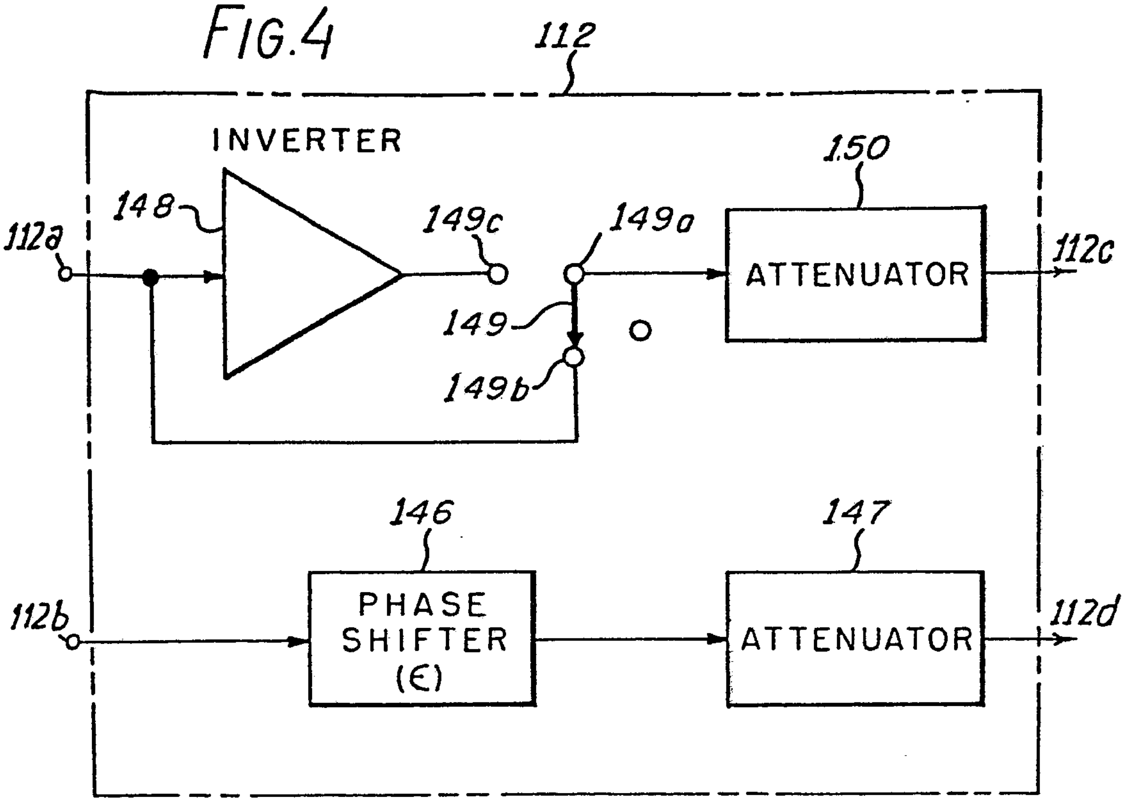
112
INVERTER
150
148
149c
149a
112a
ATTENUATOR
112c
149
149b
146
147
PHASE
SHIFTER
(ε)
ATTENUATOR
112b
112d

FIG.5

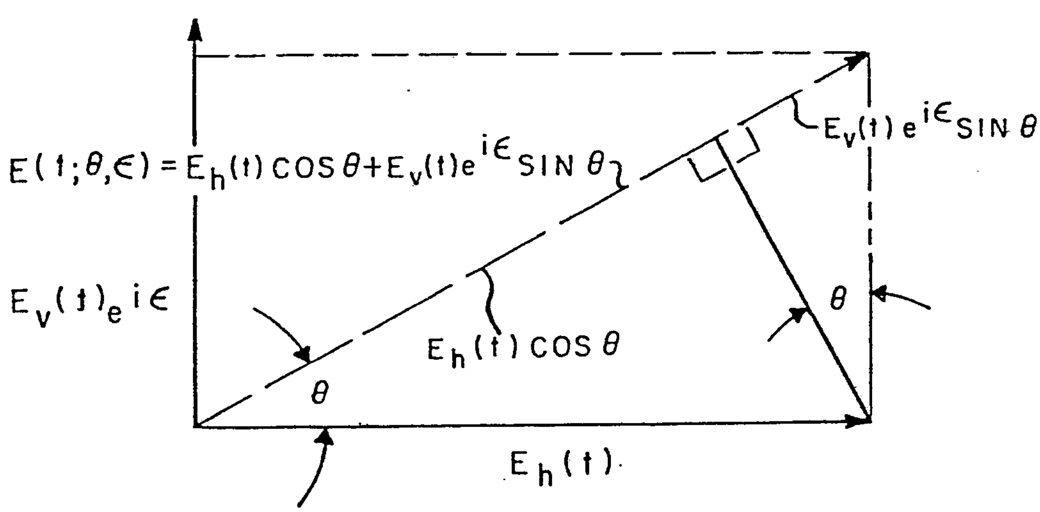
E(t;θ,ε) = Eh(t) COS θ+Ev(t)e^iε SIN θ
Ev(t) e^iε SIN θ
Ev(t)e iε
θ
Eh(t) COS θ
θ
Eh(t)

FIG.6

| | $\theta$ | $\epsilon$ | $I(\theta,\epsilon)=\langle E(t;\theta,\epsilon)E^*(t;\theta,\epsilon)\rangle=\langle \lvert E(+;\theta,\epsilon)\rvert^2\rangle$ |
|---|---|---|---|
| 1 | 0° | 0 | $\langle \lvert E_h(t)\rvert^2\rangle$ |
| 2 | 45° | 0 | $\frac{1}{2}(\langle \lvert E_h(t)\rvert^2\rangle+\langle \lvert E_v(t)\rvert^2\rangle+\langle E_h(t)E_v^*(t)\rangle+E_h^*(t)E_v(t)\rangle)$ |
| 3 | 90° | 0 | $\langle \lvert E_v(t)\rvert^2\rangle$ |
| 4 | 135° | 0 | $\frac{1}{2}(\langle \lvert E(t)\rvert^2\rangle+\langle \lvert E_v(t)\rvert^2\rangle-\langle E_h(t)E_v^*(t)\rangle-\langle E_h^*(t)E_v(t)\rangle)$ |
| 5 | 45° | $\pi/2$ | $\frac{1}{2}\ \langle \lvert E_h(t)\rvert^2\rangle+\langle \lvert E_v(t)\rvert^2\rangle+i\langle E_h(t)E_v^*(t)\rangle-i\langle E_h^*(t)E_v(t)\rangle)$ |
| 6 | 135° | $\pi/2$ | $\frac{1}{2}\ \langle \lvert E_h(t)\rvert^2\rangle+\langle \lvert E(t)\rvert^2\rangle-i\langle E_h(t)E_v^*(t)\rangle+i\langle E(t)E(t)\rangle)$ |